(19) Europäisches Patentamt
European Patent Office
Office européen des brevets

(11) EP 4 228 037 A1

# (12) EUROPEAN PATENT APPLICATION

published in accordance with Art. 153(4) EPC

(43) Date of publication:
**16.08.2023 Bulletin 2023/33**

(21) Application number: **20957090.2**

(22) Date of filing: **15.10.2020**

(51) International Patent Classification (IPC):
***H01M 4/66*** *(2006.01)* ***H01M 10/0567*** *(2010.01)*

(52) Cooperative Patent Classification (CPC):
**H01M 4/66; H01M 10/0567;** Y02E 60/10

(86) International application number:
**PCT/CN2020/121053**

(87) International publication number:
**WO 2022/077310 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventor: **WANG, Kefei**
**Ningde City, Fujian 352100 (CN)**

(74) Representative: **Icosa**
**83 avenue Denfert-Rochereau**
**75014 Paris (FR)**

## (54) ELECTROCHEMICAL DEVICE AND ELECTRONIC DEVICE

(57) This application relates to an electrochemical apparatus and an electronic apparatus. Specifically, this application provides an electrochemical apparatus, including a positive electrode, a negative electrode, and an electrolyte, where the negative electrode includes a negative electrode current collector and a negative electrode mixture layer formed on the negative electrode current collector, and the negative electrode current collector contains tin; and the electrolyte contains a sulfur-oxygen double bond-containing compound. The electrochemical apparatus in this application has improved high-temperature cycling performance and overcharge protection performance.

EP 4 228 037 A1

## Description

### TECHNICAL FIELD

This application relates to the field of energy storage, specifically to an electrochemical apparatus and an electronic apparatus, and in particular to a lithium-ion battery.

### BACKGROUND

With the development of technologies and the increasing demands for mobile apparatuses, demands for electrochemical apparatuses (for example, lithium-ion batteries) have increased significantly under different conditions of use. Therefore, higher requirements are imposed on performance of lithium-ion batteries, for example, high capacity, long cycle life, resistance to high temperature, high-rate discharge performance, and overcharge protection performance.

During the use of a lithium-ion battery, when a charging control circuit fails, the lithium-ion battery is prone to overcharge, causing an irreversible reduction reaction of lithium ions in the negative electrode. This reduces the charge-discharge cycling efficiency of the lithium-ion battery. When a charging voltage reaches a decomposition voltage of the electrolyte, the electrolyte decomposes at the positive electrode of the lithium-ion battery and produces gas, increasing the pressure and temperature inside the lithium-ion battery and reducing stability. This greatly affects high-temperature cycling performance, swelling performance, and safety of the lithium-ion battery and even leads to complete failure of the lithium-ion battery.

In view of this, it is necessary to provide an electrochemical apparatus and an electronic apparatus that have improved performance.

### SUMMARY

Some embodiments of this application provide an electrochemical apparatus and an electronic apparatus that have improved high-temperature cycling performance and overcharge protection performance, so as to resolve at least one safety problem existing in the related art to at least some extent.

According to one aspect of this application, this application provides an electrochemical apparatus, including a positive electrode, a negative electrode, and an electrolyte. The negative electrode includes a negative electrode current collector and a negative electrode mixture layer formed on the negative electrode current collector, where the negative electrode current collector contains tin. The electrolyte contains a sulfur-oxygen double bond-containing compound.

According to an embodiment of this application, the negative electrode current collector contains element copper.

According to an embodiment of this application, based on weight of the negative electrode current collector, a percentage of the tin is a%, and a falls in the range of 0.01 to 0.2.

According to an embodiment of this application, the negative electrode current collector further contains silver, and based on weight of the negative electrode current collector, a percentage of the silver ranges from 0.01% to 0.2%.

According to an embodiment of this application, the negative electrode current collector has at least one of the following characteristics:

(1) average surface roughness ranges from 0.05 μm to 1.5 μm;
(2) tensile strength is greater than 100 $N/mm^2$;
(3) 0.2% proof stress is greater than 30 $N/mm^2$; or
(4) thickness ranges from 1 μm to 100 μm.

According to an embodiment of this application, the negative electrode mixture layer has at least one of the following characteristics:

(a) reflectance Ra at a wavelength of 550 nm ranges from 7% to 15%;
(b) density da ranges from 1.3 $g/cm^3$ to 1.9 $g/cm^3$;
(c) weight per unit area La ranges from 4.5 $mg/cm^2$ to 12.5 $mg/cm^2$; or
(d) porosity Pa ranges from 20% to 40%.

According to an embodiment of this application, the sulfur-oxygen double bond-containing compound contains at least one of the following compounds: cyclic sulfate, chain sulfate, chain sulfonate, cyclic sulfonate, chain sulfite, or cyclic sulfite.

According to an embodiment of this application, the sulfur-oxygen double bond-containing compound contains

a compound expressed by formula 1:

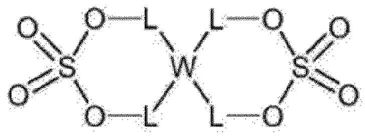
formula 1

where W is selected from

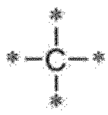
,
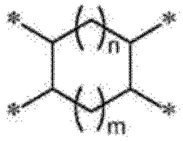
,
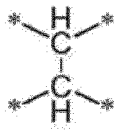
,

or

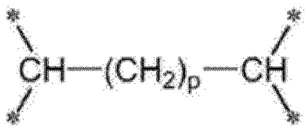
;

L is independently selected from a single bond or methylene, and at most one of two Ls in a same cyclic structure is a single bond;
m is 1, 2, 3, or 4;
n is 0, 1, or 2; and
p is 0, 1, 2, 3, 4, 5, or 6.

According to an embodiment of this application, the compound expressed by formula 1 includes at least one of the following:

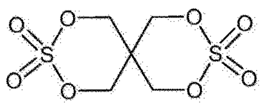
formula 1-1,

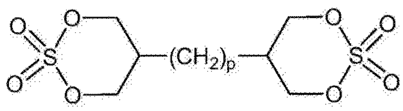
formula 1-2,

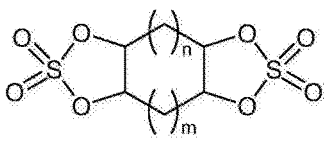
formula 1-3,

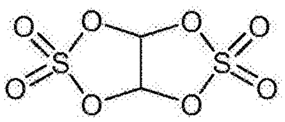
formula 1-4,

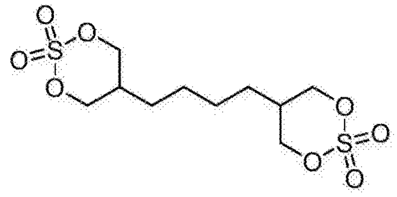

formula 1-5,

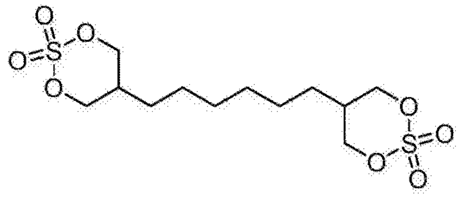

formula 1-6,

or

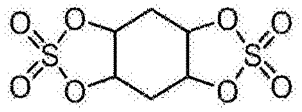

formula 1-7.

According to an embodiment of this application, based on weight of the electrolyte, a percentage of the sulfur-oxygen double bond-containing compound is b%, and b falls in the range of 0.01 to 10.

According to an embodiment of this application, the electrolyte further contains propionate, and the propionate contains a compound expressed by formula 2:

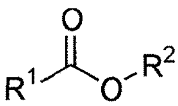

formula 2

where $R^1$ is selected from an ethyl group or a halogenated ethyl group;

$R^2$ is selected from a $C_1$-$C_6$ alkyl group or a $C_1$-$C_6$ halogenated alkyl group; and

based on weight of the electrolyte, a percentage of the propionate falls in the range of 10% to 60%.

According to an embodiment of this application, based on weight of the electrolyte, a percentage of the sulfur-oxygen double bond-containing compound is b%, b falls in the range of 0.01 to 10, and $1 \leq b/a \leq 100$.

According to an embodiment of this application, a reaction area d $m^2$ of the negative electrode mixture layer and the percentage b% of the sulfur-oxygen double bond-containing compound satisfy the following relationship: $0.5 \leq d/b \leq 30$.

According to another aspect of this application, this application provides an electronic apparatus, including the electrochemical apparatus according to this application.

Additional aspects and advantages of some embodiments of this application are partly described and presented in subsequent descriptions, or explained by implementation of some embodiments of this application.

**DESCRIPTION OF EMBODIMENTS**

Some embodiments of this application are described in detail below. Some embodiments of this application should not be construed as limitations on the application.

Unless otherwise expressly indicated, the following terms used in this specification have the meanings described below.

In the specific embodiments and claims, a list of items connected by the term "at least one of" may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A,

B, and C. The item A may contain a single element or a plurality of elements. The item B may contain a single element or a plurality of elements. The item C may contain a single element or a plurality of elements. The term "at least one type of" has the same meaning as the term "at least one of".

As used herein, the term "alkyl group" is intended to be a straight-chain saturated hydrocarbon structure having 1 to 20 carbon atoms. The term "alkyl group" is also intended to be a branched or cyclic hydrocarbon structure having 3 to 20 carbon atoms. Reference to an alkyl group with a specific carbon number is intended to cover all geometric isomers with the specific carbon number. Therefore, for example, "butyl" is meant to include n-butyl, sec-butyl, isobutyl, tert-butyl, and cyclobutyl; and "propyl" includes n-propyl, isopropyl, and cyclopropyl. Examples of the alkyl group include, but are not limited to, a methyl group, an ethyl group, an n-propyl group, an isopropyl group, an cyclopropyl group, an n-butyl group, an isobutyl group, a sec-butyl group, a tert-butyl group, a cyclobutyl group, an n-pentyl group, an isopentyl group, a neopentyl group, a cyclopentyl group, a methylcyclopentyl group, an ethylcyclopentyl group, an n-hexyl group, an isohexyl group, a cyclohexyl group, an n-heptyl group, an octyl group, a cyclopropyl group, a cyclobutyl group, a norbornyl group, and the like.

As used herein, the term "halo" means that some or all of the hydrogen atoms in a group are substituted by halogen atoms (for example, fluorine, chlorine, bromine, or iodine).

During the use of a lithium-ion battery, when a charging control circuit fails, the lithium-ion battery is prone to overcharge and overheat, greatly affecting performance of the lithium-ion battery. This problem can be avoided by using a physical method (for example, an integrated circuit protection method) and a chemical method (for example, an overcharge protection additive method). Although the integrated circuit method has advantages of reliability, ease of use, and wide application, a complex structure (for example, a plastic outer package is mandatory) and high costs are required. For the overcharge protection additive method, an additive based on a polymerization reaction (for example, biphenyl and cyclohexylbenzene) or an additive based on a reduction-oxidation reciprocating reaction (for example, lithium halide, metallocene and derivative thereof, or benzene derivative) may be used. However, biphenyl and cyclohexylbenzene will increase internal resistance of lithium-ion batteries, and degrade performance of the lithium-ion batteries. When a lithium-ion battery is under a high charging current, a lithium halide, a metallocene and a derivative thereof, and a benzene derivative cannot provide protection but possibly degrade cycling performance of the lithium-ion battery.

In this application, the foregoing problem is solved by using a combination of a negative electrode current collector containing tin and an electrolyte containing a sulfur-oxygen double bond-containing compound. This significantly improves the high-temperature performance and overcharge protection performance of the lithium-ion batteries. When the electrochemical apparatus in this application is in a high-temperature or overcharged state, generated lithium-containing reduzates are thinly spread and uniformly accumulate on an entire surface of the negative electrode, which helps reduce irreversible capacity and increase discharge capacity. Therefore, the high-temperature cycling performance and the overcharge protection performance of the electrochemical apparatus are improved, guaranteeing good performance of the electrochemical apparatus and preventing deformation.

An embodiment of this application provides an electrochemical apparatus, including a positive electrode, a negative electrode, and an electrolyte as described below.

## I. Negative electrode

The negative electrode includes a negative electrode current collector and a negative electrode mixture layer disposed on one or two surfaces of the negative electrode current collector.

### 1. Negative electrode current collector

One characteristics of the electrochemical apparatus in this application is that the negative electrode current collector contains tin. Presence of tin contributes to improving the strength and processing performance of the negative electrode current collector, and can inhibit swelling or shrinkage of the negative electrode in the charging and discharging process of the electrochemical apparatus. This significantly improves the high-temperature cycling performance and the overcharge protection performance of the electrochemical apparatus.

In some embodiments, based on weight of the negative electrode current collector, a percentage of the tin is a%, and a falls in the range of 0.01 to 0.2. In some embodiments, a falls in the range of 0.05 to 0.15. In some embodiments, a falls in the range of 0.08 to 0.10. In some embodiments, a is 0.01, 0.03, 0.05, 0.08, 0.1, 0.12, 0.15, 0.18, or 0.2, or falls in a range formed by any two of the foregoing values.

In some embodiments, the negative electrode current collector further contains silver. Presence of silver contributes to further improving the high-temperature cycling performance and the overcharge protection performance of the electrochemical apparatus.

In some embodiments, based on weight of the negative electrode current collector, a percentage of the silver ranges from 0.01% to 0.2%. In some embodiments, based on weight of the negative electrode current collector, a

percentage of the silver ranges from 0.05% to 0.15%. In some embodiments, based on weight of the negative electrode current collector, a percentage of the silver ranges from 0.08% to 0.10%. In some embodiments, based on weight of the negative electrode current collector, a percentage of the silver is 0.01%, 0.03%, 0.05%, 0.08%, 0.1%, 0.12%, 0.15%, 0.18%, or 0.2%, or falls in a range formed by any two of the foregoing values.

The percentage of tin or silver in the negative electrode current collector being in a range of 0.01% to 0.2% contributes to inhibiting surface oxidation of the negative electrode current collector, so that the negative electrode current collector has good conductivity. In addition, the negative electrode current collector can be recrystallized in a drying process after the negative electrode current collector is coated with a negative electrode mixture layer during preparation of a negative electrode. This further improves the high-temperature cycling performance and the overcharge protection performance of the electrochemical apparatus.

In some embodiments, a form of the negative electrode current collector may include, but is not limited to, a metal foil, a metal cylinder, a metal coil, a metal plate, a metal film, a sheet metal mesh, a punched metal, a foamed metal, and the like. In some embodiments, the negative electrode current collector is a metal foil. In some embodiments, the metal foil is a mesh.

In some embodiments, the negative electrode current collector contains element copper.

In some embodiments, the negative electrode current collector is a copper foil. As used herein, the term "copper foil" includes a copper alloy foil.

In some embodiments, the negative electrode current collector contains at least one of tough pitch copper or oxygen-free copper. As used herein, the term "tough pitch copper" includes a copper alloy foil with tough pitch copper as a matrix, and the term "oxygen-free copper" includes a copper alloy foil with oxygen-free copper as a matrix.

In some embodiments, the tough pitch copper complies with the JIS-H3100-C1100 standard. In some embodiments, the oxygen-free copper complies with the JIS-H3100-C1020 standard. The foregoing standard-compliant tough pitch copper or oxygen-free copper is close to pure copper in composition, has good conductivity, and therefore is suitable for the negative electrode current collector.

In some embodiments, a percentage of oxygen (based on copper) in the tough pitch copper ranges from 0.01% to 0.02%. In some embodiments, a percentage of oxygen (based on copper) in the oxygen-free copper is less than 0.001%.

In some embodiments, the copper foil contains an impurity, and the impurity includes at least one of P, Fe, Zr, Mg, S, Ge, or Ti. In some embodiments, based on weight of the copper foil, a percentage of the impurity is less than 20 ppm. When the percentage of the impurity in the copper foil falls within the foregoing range, the copper foil is not susceptible to bending and deformation. In this case, crystal orientation rotation is mitigated and shear bands are avoided, helping enhance fracture resistance of the negative electrode current collector.

In some embodiments, the negative electrode current collector has at least one of the following (1) to (4) characteristics.

(1) Average surface roughness

In some embodiments, average surface roughness of the negative electrode current collector ranges from 0.05 μm to 1.5 μm. In some embodiments, average surface roughness of the negative electrode current collector ranges from 0.1 μm to 1.3 μm. In some embodiments, average surface roughness of the negative electrode current collector ranges from 0.15 μm to 1.0 μm. In some embodiments, average surface roughness of the negative electrode current collector ranges from 0.2 μm to 0.8 μm.In some embodiments, average surface roughness of the negative electrode current collector ranges from 0.3 μm to 0.5 μm. In some embodiments, average surface roughness of the negative electrode current collector is 0.05 μm, 0.1 μm, 0.3 μm, 0.5 μm, 0.8 μm, 1 μm, 1.3 μm, or 1.5 μm, or falls in a range formed by any two of the foregoing values. When the average surface roughness of the negative electrode current collector falls within the foregoing range, an interface area between the negative electrode current collector and the negative electrode mixture layer is increased, and adhesion between the negative electrode current collector and a negative electrode active material is improved. This helps improve the high-temperature cycling performance and the overcharge protection performance of the electrochemical apparatus.

The average surface roughness of the negative electrode current collector can be measured by using a method recorded in ISO1302:2002.

(2) Tensile strength

As used herein, the term "tensile strength" refers to a ratio of maximum tensile force a sample withstands before breaking to a cross-sectional area of the sample.

In some embodiments, tensile strength of the negative electrode current collector is greater than 100 $N/mm^2$. In some embodiments, tensile strength of the negative electrode current collector is greater than 150 $N/mm^2$. In some embodiments, tensile strength of the negative electrode current collector is greater than 200 $N/mm^2$. In some embodi-

ments, tensile strength of the negative electrode current collector is greater than 250 N/mm$^2$. In some embodiments, tensile strength of the negative electrode current collector is greater than 300 N/mm$^2$. In some embodiments, tensile strength of the negative electrode current collector is greater than 350 N/mm$^2$. In some embodiments, tensile strength of the negative electrode current collector is greater than 400 N/mm$^2$. In some embodiments, tensile strength of the negative electrode current collector is greater than 450 N/mm$^2$. In some embodiments, tensile strength of the negative electrode current collector is greater than 500 N/mm$^2$. When the tensile strength of the negative electrode current collector falls within the foregoing range, cracking of the negative electrode current collector caused by the swelling or shrinkage of the negative electrode mixture layer during charging/discharging of the electrochemical apparatus can be inhibited. Therefore, the high-temperature cycling performance and the overcharge protection performance of the electrochemical apparatus are improved.

The tensile strength of the negative electrode current collector can be measured by using the same apparatus and method (with reference to GB-228-87 test method) as for measuring elongation.

(3) 0.2% proof stress

As used herein, the term "0.2% proof stress" refers to a percentage of load that will result in a plastic deformation (namely, permanent deformation) of 0.2% on a sample. In other words, when 0.2% plastic deformation is present on the sample under a load, the sample still maintains 0.2% plastic deformation even if the load is removed.

In some embodiments, 0.2% proof stress of the negative electrode current collector is greater than 30 N/mm$^2$. In some embodiments, 0.2% proof stress of the negative electrode current collector is greater than 50 N/mm$^2$. In some embodiments, 0.2% proof stress of the negative electrode current collector is greater than 100 N/mm$^2$. In some embodiments, 0.2% proof stress of the negative electrode current collector is greater than 150 N/mm$^2$. In some embodiments, 0.2% proof stress of the negative electrode current collector is greater than 200 N/mm$^2$. In some embodiments, 0.2% proof stress of the negative electrode current collector is greater than 300 N/mm$^2$. When the 0.2% proof stress of the negative electrode current collector falls within the foregoing range, cracking of the negative electrode current collector caused by the swelling or shrinkage of the negative electrode mixture layer during charging/discharging of the electrochemical apparatus can be inhibited. Therefore, the high-temperature cycling performance and the overcharge protection performance of the electrochemical apparatus are improved.

The 0.2% proof stress of the negative electrode current collector can be measured by using the same apparatus and method (with reference to GB-228-87 test method) as for measuring elongation.

(4) Thickness

In some embodiments, thickness of the negative electrode current collector ranges from 1 μm to 100 μm. In some embodiments, thickness of the negative electrode current collector ranges from 3 μm to 80 μm. In some embodiments, thickness of the negative electrode current collector ranges from 5 μm to 50 μm. In some embodiments, thickness of the negative electrode current collector ranges from 10 μm to 30 μm. In some embodiments, thickness of the negative electrode current collector ranges from 15 μm to 20 μm. In some embodiments, thickness of the negative electrode current collector is 1 μm, 3 μm, 5 μm, 10 μm, 15 μm, 20 μm, 25 μm, 30 μm, 35 μm, 40 μm, 45 μm, 50 μm, 55 μm, 60 μm, 65 μm, 70 μm, 75 μm, 80 μm, 85 μm, 90 μm, 95 μm, or 100 μm, or falls in a range formed by any two of the foregoing values. When the thickness of the negative electrode current collector falls within the foregoing range, the negative electrode current collector has high strength and is easy to coat, and the negative electrode is not prone to deformation such as curling.

2. Negative electrode mixture layer

The negative electrode mixture layer includes a negative electrode active material layer, and the negative electrode active material layer contains a negative electrode active material. The negative electrode mixture layer may be of one or more layers, and each of the plurality of layers of the negative electrode active material may contain the same or different negative electrode active materials. The negative electrode active material is any material capable of reversibly intercalating and deintercalating metal ions such as lithium ions. In some embodiments, a rechargeable capacity of the negative electrode active material is larger than a discharge capacity of the positive electrode active material to prevent lithium metal from unexpectedly precipitating onto the negative electrode during charging.

In some embodiments, the negative electrode mixture layer has at least one of the following characteristics (a) to (d).

(a) Reflectance

Reflectance of the negative electrode mixture layer can reflect smoothness of a surface of the negative electrode mixture layer and a surface compression state of the negative electrode active material on the negative electrode mixture layer. The reflectance of the negative electrode mixture layer can be controlled by a type of negative electrode active material, a forming condition of the negative electrode active material layer, and a post-treatment process after the forming, or controlled by rolling pressure during negative electrode rolling, the number of rolling times, a heating condition for rolling, a rolling plate used for rolling, and material and surface shape of a rolling roll.

In some embodiments, reflectance Ra of the negative electrode mixture layer ranges from 7% to 15% at a wavelength of 550 nm. In some embodiments, reflectance Ra of the negative electrode mixture layer ranges from 8% to 14.8% at a wavelength of 550 nm. In some embodiments, reflectance Ra of the negative electrode mixture layer ranges from 10% to 12% at a wavelength of 550 nm. In some embodiments, reflectance Ra of the negative electrode mixture layer, at a wavelength of 550 nm, is 7%, 8%, 9%, 10%, 11%, 12%, 13%, 14%, or 15%, or falls in a range formed by any two of the foregoing values. When the reflectance of the negative electrode mixture layer falls within the foregoing range, a side reaction on a surface of the negative electrode mixture layer can be suppressed, and permeability of the electrolyte passing from the surface of the negative electrode mixture layer to the inside of the negative electrode mixture layer can be improved. Therefore, a fast charging feature of the electrochemical apparatus is improved.

The reflectance of the negative electrode mixture layer can be measured by using a spectral colorimeter (for example, SPECTRO PHOTOMETER CM-5 manufactured by KONICAMINOLTA).

(b) Density

In some embodiments, density da of the negative electrode mixture layer ranges from 1.3 g/cm$^3$ to 1.9 g/cm$^3$. In some embodiments, density da of the negative electrode mixture layer ranges from 1.35 g/cm$^3$ to 1.62 g/cm$^3$. In some embodiments, density da of the negative electrode mixture layer ranges from 1.4 g/cm$^3$ to 1.6 g/cm$^3$. In some embodiments, density da of the negative electrode mixture layer is 1.3 g/cm$^3$, 1.4 g/cm$^3$, 1.5 g/cm$^3$, 1.6 g/cm$^3$, 1.7 g/cm$^3$, 1.8 g/cm$^3$, or 1.9 g/cm$^3$, or falls in a range formed by any two of the foregoing values.

(c) Weight

In some embodiments, weight per unit area La of the negative electrode mixture layer ranges from 4.5 mg/cm$^2$ to 12.5 mg/cm$^2$. In some embodiments, weight per unit area La of the negative electrode mixture layer ranges from 6.0 mg/cm$^2$ to 12.0 mg/cm$^2$. In some embodiments, weight per unit area La of the negative electrode mixture layer is 4.5 mg/cm$^2$, 5 mg/cm$^2$, 5.5 mg/cm$^2$, 6 mg/cm$^2$, 6.5 mg/cm$^2$, 7 mg/cm$^2$, 7.5 mg/cm$^2$, 8 mg/cm$^2$, 8.5 mg/cm$^2$, 9 mg/cm$^2$, 9.5 mg/cm$^2$, 10 mg/cm$^2$, 10.5 mg/cm$^2$, 11 mg/cm$^2$, 11.5 mg/cm$^2$, 12 mg/cm$^2$, or 12.5 mg/cm$^2$, or falls in a range formed by any two of the foregoing values.

The weight per unit area of the negative electrode mixture layer in this application is a ratio of mass (mg) of the negative electrode mixture layer to an area (cm$^2$) of the mixture layer. The mass and the area of the negative electrode mixture layer are obtained by using the following method: cutting out a test piece of an appropriate size from the negative electrode, measuring an area S1 of the test piece and mass W0 of the test piece, stripping the negative electrode current collector away from the negative electrode, measuring mass W1 of the negative electrode current collector, and then calculating the mass of the negative electrode mixture layer by (W0-W1). The weight per unit area = (W0-W1)/S1. If the selected negative electrode is provided with a double-sided mixture layer, the weight per unit area = (W0-W1)/S 1/2.

For a method of stripping away the negative electrode mixture layer, such methods, for example, can be used: immersing the negative electrode mixture layer in a solvent that can dissolve or swell the negative electrode mixture layer, and wiping the mixture layer with a cloth.

The weight per unit area of the negative electrode mixture layer can be adjusted by using a known method. For example, in a case that the negative electrode mixture layer is formed by coating, the weight per unit area can be adjusted by changing a solid content concentration of a coating liquid used to form the negative electrode mixture layer, the number of coating times, a gap between coating liquid inlets of a coating machine, and the like. The weight per unit area of the negative electrode mixture layer can be increased by increasing the concentration of the solid content, increasing the quantity of coating times, or enlarging the gap. The weight per unit area of the negative electrode mixture layer can be reduced by decreasing the solid content concentration, the number of coating times, the gap, or by other means.

(d) Porosity

In some embodiments, porosity Pa of the negative electrode mixture layer ranges from 20% to 40%. In some

embodiments, porosity Pa of the negative electrode mixture layer ranges from 26.5% to 31.3%. In some embodiments, porosity Pa of the negative electrode mixture layer ranges from 26% to 31%. In some embodiments, porosity Pa of the negative electrode mixture layer is 20%, 22%, 24%, 26%, 28%, 30%, 32%, 34%, 36%, 38%, or 40%, or falls in a range formed by any two of the foregoing values.

The porosity of the negative electrode mixture layer can be measured by using the following method: punching the negative electrode into small discs of 13 mm by using a punching machine, and measuring thickness of the small discs by using a ten-thousandth micrometer. A specific quantity of small discs are put into a sample chamber of an AccuPyc 1340 instrument. After the sample is purged with helium for 30 times, helium gas is filled in according to a procedure, pressure in the sample chamber is measured, and then a true volume in the sample chamber is calculated by using the Bohr's law PV=nRT. The quantity of the small discs is counted after the test, and an apparent volume of the sample is calculated. The porosity of the sample is calculated by using the following formula:

$$\text{porosity} = 1 - \text{true volume}/\text{apparent volume}$$

In some embodiments, the negative electrode mixture layer has the density and porosity as described above. In this case, excessive impregnation of the electrolyte from the surface to the inside of the negative electrode mixture layer can be suppressed, improving the diffusion of the electrolyte inside the negative electrode mixture layer and reactivity of the negative electrode mixture layer, and suppressing the side reactions of the negative electrode mixture layer. Therefore, the high-temperature performance and the overcharge protection performance of the electrochemical apparatus are improved.

Thickness of the negative electrode mixture layer is thickness of the negative electrode mixture layer applied on a single side of the negative electrode current collector. In some embodiments, the thickness of the negative electrode mixture layer is greater than 15 μm.In some embodiments, the thickness of the negative electrode mixture layer is greater than 20 μm.In some embodiments, the thickness of the negative electrode mixture layer is greater than 30 μm. In some embodiments, the thickness of the negative electrode mixture layer is less than 150 μm. In some embodiments, the thickness of the negative electrode mixture layer is less than 120 μm. In some embodiments, the thickness of the negative electrode mixture layer is less than 100 μm. In some embodiments, the thickness of the negative electrode current collector falls in a range between any two of the foregoing values. When the thickness of the negative electrode mixture layer falls within the foregoing range, the electrolyte can penetrate to the vicinity of an interface of the negative electrode current collector, improving the charging and discharging characteristics of the electrochemical apparatus at a high current density. In addition, a volume ratio of the negative electrode current collector to the negative electrode active material is within an appropriate range, which can ensure capacity of the electrochemical apparatus.

A thickness ratio of the negative electrode mixture layer to negative electrode current collector refers to dividing thickness of one side of the negative electrode mixture layer by the thickness of the negative electrode current collector, without special limitation on the value. In some embodiments, the thickness ratio is less than 50. In some embodiments, the thickness ratio is less than 30. In some embodiments, the thickness ratio is less than 20. In some embodiments, the thickness ratio is less than 10. In some embodiments, the thickness ratio is greater than 1. In some embodiments, the thickness ratio is within a range between any two of the foregoing values. When the thickness ratio falls within the foregoing range, the capacity of the electrochemical apparatus can be ensured while heat release of the negative electrode current collector can be suppressed during charging and discharging at a high current density.

Negative electrode active material

In some embodiments, the negative electrode active material includes but is not limited to carbon materials such as graphite, hard carbon, soft carbon, ad MCMB, silicon, silicon-containing compounds such as oxide of silicon represented by $SiO_x$ ($0 < x < 2$), lithium metal, metal that forms an alloy with lithium and alloys thereof, amorphous compounds mainly composed of oxides such as tin dioxide, and lithium titanate ($Li_4Ti_5O_{12}$).

In some embodiments, the negative electrode active material includes a carbon material. In some embodiments, the negative electrode active material includes a carbon material of a graphite structure. In some embodiments, the negative electrode active material is at least one of artificial graphite or natural graphite.

In some embodiments, the metal that forms an alloy with lithium includes but is not limited to aluminum, silicon, tin, germanium, and the like.

In some embodiments, the negative electrode active material includes different components, mainly a carbon material of a graphite structure. In some embodiments, based on weight of the negative electrode mixture layer, a percentage of the carbon material of a graphite structure is greater than 70.0%. In some embodiments, based on weight of the negative electrode mixture layer, a percentage of the carbon material of a graphite structure is greater than 90.0%. Based on weight of the negative electrode mixture layer, a percentage of the carbon material of a graphite structure is

greater than 95.0%.

In some embodiments, the negative electrode active material is a metal or a semi-metal forming an alloy with lithium and represented by silicon, and an alloy thereof, and has a high charge and discharge capacity.

In some embodiments, the negative electrode active material is a metal or a semi-metal forming an alloy with lithium and represented by silicon, an alloy thereof, and a mixture with the carbon material of a graphite structure.

Binder

In some embodiments, the negative electrode mixture layer further includes a negative electrode binder. The negative electrode binder can improve binding between particles of the negative electrode active material and binding between the negative electrode mixture layer and the negative electrode current collector. The type of the negative electrode binder is not particularly limited, provided that its material is stable to the electrolyte or a solvent used in manufacturing of the electrode.

Examples of the negative electrode binder includes but is not limited to a resin-based polymer such as polyethylene, polypropylene, polyzhexyl glycolin glycol, polymethyl methacrylate, aromatic polyamide, cellulose, or nitrobeein; a rubber polymer such as SBR (butadyl rubber), isoprene rubber, butadiene rubber, fluorine rubber, NBR (acrylinebutadiene rubber), or lyerene-acrylic rubber; butadiene-styrene embedded segment conjugate or hydrogen derifice thereof; a thermoplastic elastomeric polymer such as EPDM (ethylene-acryl-dizide trigaitus), styrene-ethylene-butadiene-styrene cluster, styrene-isobutylene-styrene block copolymer or hydrogenated product thereof; a soft resinous polymer such as syndiotactic 1,2 polybutadiene, polyvinyl acetate, ethylene-vinyl acetate copolymer, or propylene-$\alpha$-olefin copolymer; a fluorine polymer such as polyvinylidene fluoride, polytetrafluoroethylene, fluorinated polyvinylidene fluoride, or polytetrafluoroethylene-ethylene copolymer; and polymer compositions, having ion conductivity of an alkali metal ion (especially, lithium ion) and so on. The negative electrode binder may be used alone or in any combination.

In some embodiments, based on the weight of the negative electrode mixture layer, a percentage of the negative electrode binder is greater than 0.1%, greater than 0.5%, or greater than 0.6%. In some embodiments, based on the weight of the negative electrode mixture layer, a percentage of the negative electrode binder is less than 10%, less than 8%, less than 5%, or less than 4%. In some embodiments, a percentage of the negative electrode binder is within a range between any two of the foregoing values. When the percentage of the negative electrode binder falls within the foregoing range, the capacity and negative electrode strength of the electrochemical apparatus can be fully guaranteed.

In a case that the negative electrode mixture layer contains a rubber polymer (for example, SBR), in some embodiments, based on the weight of the negative electrode mixture layer, the percentage of the negative electrode binder is greater than 0.1%, greater than 0.5%, or greater than 0.6%. In some embodiments, based on the weight of the negative electrode mixture layer, the percentage of the negative electrode binder is less than 5%, less than 3%, or less than 2%. In some embodiments, based on the weight of the negative electrode mixture layer, the percentage of the negative electrode binder is within a range between any two of the foregoing values.

In a case that the negative electrode mixture layer contains a fluorine polymer (for example, polyvinylidene fluoride), in some embodiments, based on the weight of the negative electrode mixture layer, the percentage of the negative electrode binder is greater than 1%, greater than 2%, or greater than 3%. In some embodiments, based on the weight of the negative electrode mixture layer, the percentage of the negative electrode binder is less than 15%, less than 10%, or less than 8%. Based on the weight of the negative electrode mixture layer, the percentage of the negative electrode binder is within a range between any two of the foregoing values.

Thickener

A thickener is usually used to adjust viscosity of slurry. The type of the thickener is not particularly limited, and examples of the thickener may include, but are not limited to, carboxymethyl cellulose, methyl cellulose, hydroxymethyl cellulose, ethyl cellulose, polyvinyl alcohol, oxidized starch, phosphorylated starch, casein, salt thereof, and the like. The thickeners may be used alone or in any combination.

In some embodiments, based on the weight of the negative electrode mixture layer, a percentage of the thickener is greater than 0.1%, greater than 0.5%, or greater than 0.6%. In some embodiments, based on the weight of the negative electrode mixture layer, the percentage of the thickener is less than 5%, less than 3%, or less than 2%. When the percentage of the thickener falls within the foregoing range, a decrease in the capacity of the electrochemical apparatus and an increase in the resistance can be suppressed, and a good coating property of the negative electrode slurry can be ensured.

Solvent

The type of a solvent used for forming the negative electrode slurry is not limited provided that the solvent is

capable of dissolving or dispersing the negative electrode active material, the negative electrode binder, and the thickener and a conductive material used as required. In some embodiments, the solvent used to form the negative electrode slurry may be any one of an aqueous solvent and an organic solvent. Examples of the aqueous solvent may include, but are not limited to, water, alcohol, and the like. Examples of the organic solvent may include, but are not limited to, N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, tetrahydrofuran (THF), Toluene, acetone, diethyl ether, hexamethylphosphoramide, dimethyl sulfoxide, benzene, xylene, quinoline, pyridine, methylnaphthalene, hexane, and the like. The solvents may be used alone or in any combination.

Preparation of negative electrode

The negative electrode of the electrochemical apparatus in this application can be prepared using any known method. For example, a binder, a solvent, as well as a thickener, a conductive material, a filling material, or the like, which are added as required, are added into the negative electrode active material to make a slurry. The slurry is applied on the negative electrode current collector. After drying and compression, an electrode is formed. Alternatively, the negative electrode active material can be rolled into a sheet electrode, or made into a granular electrode by compression molding.

II. Electrolyte

The electrolyte used in the electrochemical apparatus of this application includes an electrolytic salt and a solvent for dissolving the electrolytic salt. In some embodiments, the electrolyte used in the electrochemical apparatus of this application further includes an additive.

Another major characteristic of the electrochemical apparatus in this application is that the electrolyte includes a sulfur-oxygen double bond-containing compound.

In some embodiments, the sulfur-oxygen double bond-containing compound includes at least one of the following compounds: cyclic sulfate, chain sulfate, chain sulfonate, cyclic sulfonate, chain sulfite, or cyclic sulfite.

In some embodiments, the cyclic sulfate may include, but are not limited to, one or more of the following: 1,2-ethylene glycol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate, 1,5-pentanediol sulfate, and the like.

In some embodiments, the chain sulfate includes but is not limited to one or more of the following: dimethyl sulfate, ethyl methyl sulfate, diethyl sulfate, and the like.

In some embodiments, the chain sulfonate includes but is not limited to one or more of the following: fluorosulfonate such as methyl fluorosulfonate and ethyl fluorosulfonate, methyl methanesulfonate, ethyl methanesulfonate, butyl dimethanesulfonate, methyl 2-(methanesulfonyloxy) propionate, ethyl 2-(methanesulfonyloxy) propionate, and the like.

The cyclic sulfonate includes but is not limited to one or more of the following: 1,3-propanesulfonate, 1-fluoro-1,3-propanesulfonate, 2-fluoro-1,3-propanesulfonate, 3-fluoro-1,3-propanesulfonate, 1-methyl-1,3-propanesulfonate, 2-methyl- 1,3 -propanesulfonate, 3-methyl-1,3-propanesulfonate, 1-propylene-1,3-sulfonate, 2-propylene-1,3-sulfonate, 1-fluoro-1-propylene-1,3-sulfonate, 2-fluoro-1-propylene-1,3-sulfonate, 3-fluoro-1-propylene-1,3-sulfonate, 1-fluoro-2-propylene-1,3-sulfonate, 2-fluoro-2-propylene-1,3-sulfonate, 3 -fluoro-2-propylene-1,3 -sulfonate, 1 -methyl-1 -propylene-1, 3 -sulfonate, 2-methyl-1-propylene-1,3 -sulfonate, 3-methyl-1-propylene-1,3-sulfonate, 1-methyl-2-propylene-1,3-sulfonate, 2-methyl-2-propylene-1,3-sulfonate, 3-methyl-2-propylene-1,3-sulfonate, 1,4-butane sulfonate, 1,5-pentanesulfonate, methylene methanedisulfonate, ethylene methane disulfonate, and the like.

In some embodiments, the chain sulfite includes but is not limited to one or more of the following: dimethyl sulfate, ethyl methyl sulfate, diethyl sulfate, and the like.

In some embodiments, the cyclic sulfite includes but is not limited to one or more of the following: 1,2-ethylene glycol sulfite, 1,2-propanediol sulfite, 1,3-propanediol sulfite, 1,2-butanediol sulfite, 1,3-butanediol sulfite, 1,4-butanediol sulfite, 1,2-pentanediol sulfite, 1,3-pentanediol sulfite, 1,4-pentanediol sulfite, 1,5-pentanediol sulfite, and the like.

In some embodiments, the sulfur-oxygen double bond-containing compound includes a compound of formula 1:

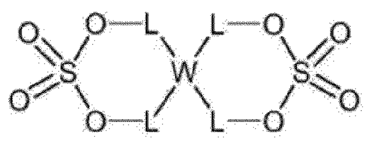

formula 1,

where W is selected from

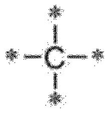, 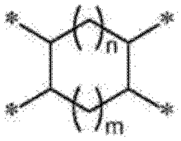, 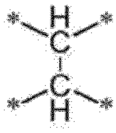,

or

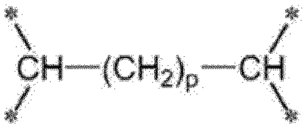;

L is independently selected from a single bond or methylene;
m is 1, 2, 3, or 4;
n is 0, 1, or 2; and
p is 0, 1, 2, 3, 4, 5, or 6.

In some embodiments, the compound of formula 1 contains at least one of the following:

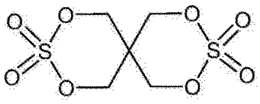 formula 1-1,

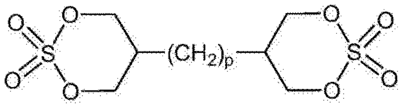 formula 1-2,

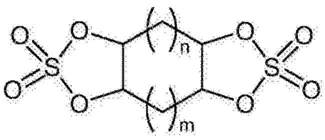 formula 1-3,

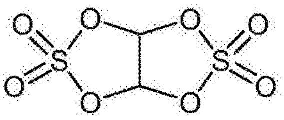 formula 1-4,

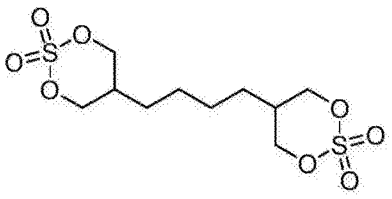 formula 1-5,

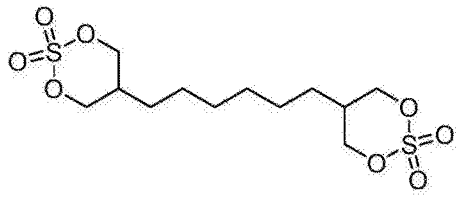

formula 1-6,

or

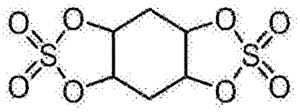

formula 1-7.

In some embodiments, based on weight of the electrolyte, a percentage of the sulfur-oxygen double bond-containing compound is b%, and b is within a range from 0.01 to 10. In some embodiments, b falls in the range of 0.1 to 8. In some embodiments, b falls in the range of 0.5 to 5. In some embodiments, b falls in the range of 1 to 3. In some embodiments, b is 0.01, 0.05, 0.1, 0.5, 0.8, 1, 1.5, 2, 2.5, 3, 3.5, 4, 4.5, 5, 5.5, 6, 6.5, 7, 7.5, 8, 8.5, 9, 9.5, or 10, or falls in a range formed by any two of the foregoing values. The percentage of the sulfur-oxygen double bond-containing compound in the electrolyte being within the foregoing range helps further improve the high-temperature performance and the overcharge protection performance of the electrochemical apparatus.

In some embodiments, the percentage b% of the sulfur-oxygen double bond-containing compound in the electrolyte and the percentage a% of tin in the negative electrode current collector satisfy the following relationship: $1 \leq b/a \leq 100$. In some embodiments, $5 \leq b/a \leq 80$. In some embodiments, $10 \leq b/a \leq 50$. In some embodiments, $20 \leq b/a \leq 30$. In some embodiments, b/a is 1, 5, 10, 15, 20, 25, 30, 35, 40, 45, 50, 55, 60, 65, 70, 75, 80, 85, 90, 95, or 100, or falls in a range formed by any two of the foregoing values. The percentage b% of the sulfur-oxygen double bond-containing compound in the electrolyte and the percentage a% of tin in the negative electrode current collector satisfying the foregoing relationship helps further improve the high-temperature performance and the overcharge protection performance of the electrochemical apparatus.

In some embodiments, a reaction area d $m^2$ of the negative electrode mixture layer and the percentage b% of the sulfur-oxygen double bond-containing compound in the electrolyte satisfy the following relationship: $0.5 \leq d/b \leq 30$. In some embodiments, $1 \leq d/b \leq 25$. In some embodiments, $5 \leq d/b \leq 20$. In some embodiments, $10 \leq d/b \leq 15$. In some embodiments, d/b is 0.5, 1, 5, 10, 15, 20, 25, or 30, or falls in a range formed by any two of the foregoing values. The reaction area d $m^2$ of the negative electrode mixture layer and the percentage b% of the sulfur-oxygen double bond-containing compound in the electrolyte satisfying the foregoing relationship helps further improve the high-temperature performance and the overcharge protection performance of the electrochemical apparatus.

In some embodiments, the reaction area of the negative electrode mixture layer ranges from 0.005 $m^2$ to 300 $m^2$. In some embodiments, the reaction area of the negative electrode mixture layer ranges from 0.01 $m^2$ to 250 $m^2$. In some embodiments, the reaction area of the negative electrode mixture layer ranges from 0.05 $m^2$ to 200 $m^2$. In some embodiments, the reaction area of the negative electrode mixture layer ranges from 0.1 $m^2$ to 150 $m^2$. In some embodiments, the reaction area of the negative electrode mixture layer ranges from 0.5 $m^2$ to 100 $m^2$. In some embodiments, the reaction area d of the negative electrode mixture layer ranges from 1 $m^2$ to 50 $m^2$. In some embodiments, the reaction area of the negative electrode mixture layer ranges from 5 $m^2$ to 30 $m^2$. In some embodiments, the reaction area of the negative electrode mixture layer ranges from 10 $m^2$ to 20 $m^2$. In some embodiments, the reaction area of the negative electrode mixture layer is 0.005 $m^2$, 0.01 $m^2$, 0.05 $m^2$, 0.1 $m^2$, 0.5 $m^2$, 1 $m^2$, 5 $m^2$, 10 $m^2$, 50 $m^2$, 100 $m^2$, 150 $m^2$, 200 $m^2$, 250 $m^2$, or 300 $m^2$, or falls in a range formed by any two of the foregoing values.

The reaction area of the negative electrode mixture layer can be measured by using the following method: using a surface area meter (a full-automatic surface area measuring apparatus manufactured by Ohkura Riken Co., Ltd.) to predry the sample in a stream of nitrogen gas at 350°C for 15 minutes, and using a nitrogen-helium gas mixture with the nitrogen pressure relative to the atmospheric pressure being accurately adjusted to 0.3 to conduct tests by using single point BET nitrogen adsorption utilizing a gas flow method. A specific surface area of the negative electrode mixture layer is measured by using this method. The specific surface area of the negative electrode mixture layer refers to a specific surface area of the entire negative electrode mixture layer including the negative electrode active material and the additives (binder, conductive agent, thickener, filler, and the like). The weight of the negative electrode mixture layer is measured, that is, the total weight of the negative electrode mixture layer including the negative electrode active material and the additives (binder, conductive agent, thickener, filler, and the like). The reaction area of the negative

electrode mixture layer is calculated by using the following equation:

$$\text{reaction area} = \text{specific surface area of the negative electrode mixture layer} \times \text{weight of the negative electrode mixture layer.}$$

In some embodiments, the electrolyte further includes at least one of the following compounds:

(i) propionate;
(ii) organic compound having a cyano group;
(iii) lithium difluorophosphate; or
(iv) compound of formula 3:

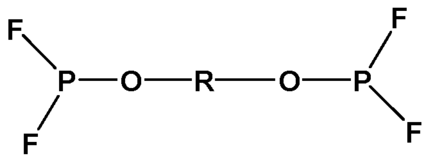
formula 3

where R is a substituted or unsubstituted $C_1$-$C_{10}$ alkyl group, and in the case of substitution, a substituent group is halogen.

(i) Propionate

In some embodiments, the propionate contains a compound of formula 2:

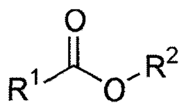
formula 2

where $R^1$ is selected from an ethyl group or a halogenated ethyl group; and
$R^2$ is selected from a $C_1$-$C_6$ alkyl group or a $C_1$-$C_6$ halogenated alkyl group.

In some embodiments, the propionate includes but is not limited to methyl propionate, ethyl propionate, propyl propionate, butyl propionate, amyl propionate, methyl halopropionate, ethyl halopropionate, propyl halopropionate, butyl halopropionate, and amyl halopropionate. In some embodiments, the propionate is selected from at least one of methyl propionate, ethyl propionate, propyl propionate, butyl propionate, and pentyl propionate. In some embodiments, the halogen group in the methyl halopropionate, ethyl halopropionate, propyl halopropionate, butyl halopropionate and pentyl halopropionate is one or more selected from a group consisting of a fluorine group (-F), a chlorine group (-Cl), a bromine group (-Br) and an iodine group (-I) In some embodiments, the halogen group is the fluorine group (-F). In this case, better effects may be achieved.

In some embodiments, based on the weight of the electrolyte, a percentage of the propionate ranges from 10% to 60%. In some embodiments, based on the weight of the electrolyte, a percentage of the propionate ranges from 20% to 50%. In some embodiments, based on the weight of the electrolyte, a percentage of the propionate ranges from 30% to 40%. In some embodiments, based on the weight of the electrolyte, a percentage of the propionate is 10%, 15%, 20%, 25%, 30%, 35%, 40%, 45%, 50%, 55%, or 60%, or falls in a range formed by any two of the foregoing values. The percentage of the propionate in the electrolyte being within the foregoing range helps further improve the high-temperature performance and the overcharge protection performance of the electrochemical apparatus.

(ii) Compound having a cyano group

In some embodiments, the compound having a cyano group may include, but is not limited to, one or more of the following: butanedinitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,2-dicyanobenzene, 1,3-dicyanobenzene, 1,4-dicyanobenzene, ethylene glycol bis(propionitrile) ether, 3,5-dioxa-heptanedionitrile, 1,4-bis(cyanoethoxy) butane, diethylene glycol di(2-cyanoethyl) ether, triethylene glycol di(2-cyanoethyl) ether, tetraethylene glycol di(2-cyanoethyl) ether, 1,3-di(2-cyanoethoxy) propane, 1,4-di(2-cyanoethoxy) butane, 1,5-di(2-cyanoethoxy) pentane, ethylene glycol di(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, and 1,2,5-tris(cyanoethoxy)pentane.

The compounds having a cyano group may be used alone or in any combination. If the electrolytic salt contains two or more compounds having a cyano group, a percentage of the compounds having a cyano group is the total percentage of the two or more compounds having a cyano group. In some embodiments, based on the weight of the electrolyte, a percentage of the compound having a cyano group ranges from 0.1% to 15%. In some embodiments, based on the weight of the electrolyte, a percentage of the compound having a cyano group ranges from 0.5% to 10%. In some embodiments, based on the weight of the electrolyte, a percentage of the compound having a cyano group ranges from 1% to 8%. In some embodiments, based on the weight of the electrolyte, a percentage of the compound having a cyano group ranges from 3% to 5%. In some embodiments, based on the weight of the electrolyte, a percentage of the compound having a cyano group is 0.1%, 0.5%, 1%, 3%, 5%, 8%, 10%, 13%, or 15%, or falls in a range formed by any two of the foregoing values.

(iii) Lithium difluorophosphate ($LiPO_2F_2$)

In some embodiments, based on the weight of the electrolyte, a percentage of the lithium difluorophosphate ranges from 0.01% to 1.5%. In some embodiments, based on the weight of the electrolyte, a percentage of the lithium difluorophosphate ranges from 0.05% to 1.2%. In some embodiments, based on the weight of the electrolyte, a percentage of the lithium difluorophosphate ranges from 0.1% to 1.0%. In some embodiments, based on the weight of the electrolyte, a percentage of the lithium difluorophosphate ranges from 0.5% to 0.8%. In some embodiments, based on the weight of the electrolyte, a percentage of the lithium difluorophosphate is 0.01%, 0.05%, 0.1%, 0.15%, 0.2%, 0.25%, 0.3%, 0.35%, 0.4%, 0.45%, 0.5%, 0.8%, 1%, or 1.5%, or falls in a range formed by any two of the foregoing values.

(iv) Compound of formula 3

In some embodiments, the compound of formula 3 contains at least one of the following structural formulas:

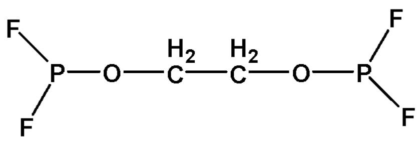
formula 3-1;

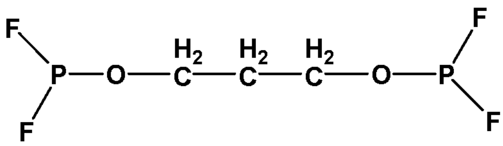
formula 3-2;

or

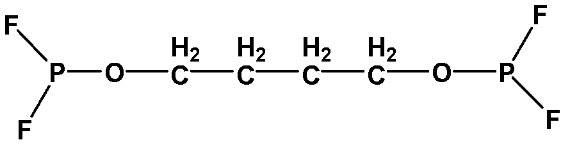
formula 3-3.

In some embodiments, based on the weight of the electrolyte, a percentage of the compound of formula 3 ranges from 0.01% to 5%. In some embodiments, based on the weight of the electrolyte, a percentage of the compound of formula 3 ranges from 0.05% to 3%. In some embodiments, based on the weight of the electrolyte, a percentage of the compound of formula 3 ranges from 0.1% to 2%. In some embodiments, based on the weight of the electrolyte, a percentage of the compound of formula 3 ranges from 0.5% to 1%. In some embodiments, based on the weight of the

electrolyte, a percentage of the compound of formula 3 is 0.01%, 0.05%, 0.1%, 0.5%, 1%, 2%, 3%, 4%, or 5%, or falls in a range formed by any two of the foregoing values.

Solvent

In some embodiments, the electrolyte further contains any non-aqueous solvent that is known in the art and that may be used as a solvent for the electrolyte.

In some embodiments, the non-aqueous solvent includes but is not limited to one or more of the following: cyclic carbonate, linear carbonate, cyclic carboxylate, linear carboxylate, cyclic ether, linear ether, a phosphorus-containing organic solvent, a sulfur-containing organic solvent, and an aromatic fluorine-containing solvent.

In some embodiments, examples of the cyclic carbonate may include, but are not limited to, one or more of the following: ethylene carbonate (EC), propylene carbonate (PC), and butylene carbonate. In some embodiments, the cyclic carbonate has 3 to 6 carbon atoms.

In some embodiments, examples of the linear carbonate may include, but are not limited to, one or more of the following: dimethyl carbonate, ethyl methyl carbonate, diethyl carbonate (DEC), methyl n-propyl carbonate, ethyl n-propyl carbonate, dipropyl carbonate, and the like. Examples of the linear carbonate substituted with fluorine may include, but are not limited to, one or more of the following: bis(fluoromethyl) carbonate, bis(difluoromethyl) carbonate, bis (trifluoromethyl) carbonate, bis(2-fluoroethyl) carbonate, bis (2,2-difluoroethyl) carbonate, bis(2,2,2-trifluoroethyl) carbonate, 2-fluoroethyl methyl carbonate, 2,2-difluoroethyl methyl carbonate, 2,2,2-trifluoroethyl methyl carbonate, and the like.

In some embodiments, examples of the cyclic carboxylate may include, but are not limited to, one or more of the following: γ-butyrolactone and γ-valerolactone. In some embodiments, some hydrogen atoms in the cyclic carboxylate may be replaced with fluorine.

In some embodiments, examples of the linear carboxylates may include, but are not limited to, one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the chain carboxylate may be replaced with fluorine. In some embodiments, examples of the fluorine-substituted linear carboxylate may include, but are not limited to, methyl trifluoroacetate, ethyl trifluoroacetate, propyl trifluoroacetate, butyl trifluoroacetate, 2,2,2-trifluoroethyl trifluoroacetate, and the like.

In some embodiments, examples of the cyclic ether may include, but are not limited to, one or more of the following: tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, examples of the linear ether may include, but are not limited to, one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxy ethane, and 1,2-ethoxymethoxyethane.

In some embodiments, examples of the phosphorus-containing organic solvent may include, but are not limited to, one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris(2,2,2-trifluoroethyl) phosphate, tris(2,2,3,3,3-pentafluoropropyl) phosphate, and the like.

In some embodiments, examples of the sulfur-containing organic solvent may include, but are not limited to, one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the organic solvent containing sulfur may be replaced with fluorine.

In some embodiments, the aromatic fluorine-containing solvent includes but is not limited to one or more of the following: fluorobenzene, difluorobenzene, trifluorobenzene, tetrafluorobenzene, pentafluorobenzene, hexafluorobenzene, and trifluoromethylbenzene.

In some embodiments, the solvent used in the electrolyte in this application includes cyclic carbonate, chain carbonate, cyclic carboxylate, chain carboxylate, and a combination thereof. In some embodiments, the solvent used in the electrolyte in this application includes at least one of ethylene carbonate, propylene carbonate, diethyl carbonate, ethyl propionate, propyl propionate, propyl acetate, or ethyl acetate. In some embodiments, the solvent used in the electrolyte in this application includes ethylene carbonate, propylene carbonate, diethyl carbonate, ethyl propionate, propyl propionate, γ-butyrolactone, and a combination thereof.

Additive

In some embodiments, examples of the additive may include, but are not limited to, one or more of the following:

fluorocarbonate, carbon-carbon double bond-containing ethylene carbonate, and anhydride.

In some embodiments, based on the weight of the electrolyte, a percentage of the additive is 0.01% to 15%, 0.1% to 10%, or 1% to 5%.

According to an embodiment of this application, based on the weight of the electrolyte, the percentage of the propionate is 1.5 to 30 times, 1.5 to 20 times, 2 to 20 times, or 5 to 20 times the percentage of the additive.

In some embodiments, the additive includes one or more fluorocarbonates. During charging/discharging of the lithium-ion battery, the fluorocarbonate may act with the propionate to form a stable protective film on the surface of the negative electrode, so as to suppress decomposition reaction of the electrolyte.

In some embodiments, the fluoroethylene carbonate has a formula $C{=}O(OR_x)(OR_y)$, where $R_x$ and $R_y$ each are selected from an alkyl group or haloalkyl alkyl group having 1 to 6 carbon atoms. At least one of $R_x$ and $R_y$ is selected from a fluoroalkyl group having 1 to 6 carbon atoms. $R_x$ and $R_y$, optionally together with the atoms to which they are attached, form a 5- to 7-membered ring.

In some embodiments, examples of the fluoroethylene carbonate may include, but are not limited to, one or more of the following: fluoroethylene carbonate, cis-4,4-difluoroethylene carbonate, trans-4,4-difluoroethylene carbonate, 4,5-difluoroethylene carbonate, 4-fluoro-4-methyl ethylene carbonate, 4-fluoro-5-methyl ethylene carbonate, and the like.

In some embodiments, the additive includes one or more carbon-carbon double bond-containing ethylene carbonates. Examples of the carbon-carbon double bond-containing ethylene carbonate may include, but are not limited to, one or more of the following: vinylidene carbonate, methylvinylidene carbonate, ethylvinylidene carbonate, 1,2-dimethylvinylidene carbonate, 1,2-diethylvinylidene carbonate, fluorovinylidene carbonate, trifluoromethylvinylidene carbonate; vinylethylene carbonate, 1-methyl-2-vinylethylene carbonate, 1-ethyl-2-vinylethylene carbonate, 1-n-propyl-2-vinylethylene carbonate, 1-methyl-2-vinylethylene carbonate, 1,1-divinylethylene carbonate, 1,2-divinylethylene carbonate, 1,1-dimethyl-2-methylene ethylene carbonate, 1,1-diethyl-2-methylene ethylene carbonate, and the like. In some embodiments, the carbon-carbon double bond containing ethylene carbonate includes vinylidene carbonate, and can easily achieve better effects.

In some embodiments, the additive is a combination of fluorocarbonate and carbon-carbon double bond containing ethylene carbonate. In some embodiments, the additive is a combination of fluorocarbonate and the sulfur-oxygen double bond-containing compound. In some embodiments, the additive is a combination of fluorocarbonate and a compound having 2 to 4 cyano groups. In some embodiments, the additive is a combination of fluorocarbonate and cyclic carboxylate. In some embodiments, the additive is a combination of fluorocarbonate and cyclic phosphoric anhydride. In some embodiments, the additive is a combination of fluorocarbonate and phosphoric anhydride. In some embodiments, the additive is a combination of fluorocarbonate and sulfonic anhydride. In some embodiments, the additive is a combination of fluorocarbonate and carboxylic acid sulfonic anhydride.

Electrolytic salt

The electrolytic salt is not particularly limited. Any substance commonly known as being applicable to serve as an electrolytic salt can be used. For lithium secondary batteries, lithium salts are typically used. Examples of the electrolytic salt may include, but are not limited to, inorganic lithium salts such as $LiPF_6$, $LiBF_4$, $LiClO_4$, $LiAlF_4$, $LiSbF_6$, and $LiWF_7$; lithium tungstates such as LiWOFs; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonate) borate salts such as lithium bis(malonate) borate and lithium difluoro(malonate) borate; lithium (malonato)phosphate salts such as lithium tris(malonato)phosphate, lithium difluorobis(malonato)phosphate, and lithium tetrafluoro(malonato)phosphate; fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$; lithium oxalatoborate salts such as lithium difluorooxalatoborate and lithium bis(oxalato)borate; and lithium oxalatophosphate salts such as lithium tetrafluorooxalatophosphate, lithium difluorobis(oxalato)phosphate, and lithium tris(oxalato)phosphate.

In some embodiments, the electrolytic salt is selected from $LiPF_6$, $LiSbF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluorooxalatoborate, lithium bis(oxalato)borate, or lithium difluorobis(oxalato)phosphate, which helps improve characteristics of the electrochemical apparatus such as output power, high-rate charge/discharge, high-temperature storage, and cycling characteristics.

The concentration of the electrolytic salt is not particularly limited, provided that the effects of this application are not impaired. In some embodiments, the total molar concentration of lithium in the electrolyte is greater than 0.3 mol/L, greater than 0.4 mol/L, or greater than 0.5 mol/L. In some embodiments, the total molar concentration of lithium in the electrolyte is less than 3 mol/L, less than 2.5 mol/L, or less than 2.0 mol/L. In some embodiments, the total molar concentration of lithium in the electrolytic salt is within a range between any two of the foregoing values. When the concentration of the electrolytic salt falls within the foregoing range, the amount of lithium as charged particles would not be excessively small, and the viscosity can be controlled within an appropriate range, so as to ensure good conductivity.

When two or more electrolytic salts are used, the electrolytic salts include at least one salt selected from a group consisting of monofluorophosphate, borate, oxalate, and fluorosulfonate. In some embodiments, the electrolytic salt includes a salt selected from a group consisting of monofluorophosphate, oxalate, and fluorosulfonate. In some embodiments, the electrolytic salt includes a lithium salt. In some embodiments, based on weight of the electrolytic salt, a percentage of the salt selected from the group consisting of monofluorophosphate, borate, oxalate, and fluorosulfonate is greater than 0.01% or greater than 0.1%. In some embodiments, based on weight of the electrolytic salt, a percentage of the salt selected from the group consisting of monofluorophosphate, borate, oxalate, and fluorosulfonate is less than 20% or less than 10%. In some embodiments, a percentage of the salt selected from the group consisting of monofluorophosphate, borate, oxalate, and fluorosulfonate is within a range between any two of the foregoing values.

In some embodiments, the electrolytic salt includes more than one substance selected from the group consisting of monofluorophosphate, borate, oxalate, and fluorosulfonate, and more than one other salt different from the more than one substance. Examples of the other salt different from the salts in the group include lithium salts exemplified above, and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$ and $LiPF_3(C_2F_5)_3$. In some embodiments, the other salt is $LiPF_6$.

In some embodiments, based on the weight of the electrolytic salt, a percentage of the other salt is greater than 0.01% or greater than 0.1%. In some embodiments, based on the weight of the electrolytic salt, a percentage of the other salt is less than 20%, less than 15%, or less than 10%. In some embodiments, a percentage of the other salt is within a range between any two of the foregoing values. The other salt of the foregoing percentage helps balance the conductivity and viscosity of the electrolyte.

In the electrolyte, in addition to the foregoing solvent, additive, and electrolytic salt, additional additives such as a negative electrode film forming agent, a positive electrode protection agent, and an overcharge prevention agent may be included as necessary. For the additive, an additive typically used in non-aqueous electrolyte secondary batteries may be used, and examples thereof may include, but are not limited to, vinylidene carbonate, succinic anhydride, biphenyl, cyclohexylbenzene, 2,4-difluoroanisole, and the like. These additives may be used alone or in any combination. In addition, a percentage of these additives in the electrolyte is not particularly limited and may be set as appropriate to the types of the additives and the like. In some embodiments, based on the weight of the electrolyte, the percentage of the additive is less than 5%, within a range of 0.01% to 5%, or falls in a range of 0.2% to 5%.

## III. Positive electrode

The positive electrode includes a positive electrode current collector and a positive electrode mixture layer disposed on one or both surfaces of the positive electrode current collector.

### 1. Positive electrode mixture layer

The positive electrode includes the positive electrode mixture layer. The positive electrode mixture layer includes a positive electrode active material. The positive electrode mixture layer may be of one or more layers. Each layer of the multilayer positive electrode active materials may contain the same or different positive electrode active materials. The positive electrode active material is any material capable of reversibly intercalating and deintercalating metal ions such as lithium ions.

The type of the positive electrode active material is not particularly limited, provided that metal ions (for example, lithium ions) can be electrochemically absorbed and released. In some embodiments, the positive electrode active material is a substance that contains lithium and at least one transition metal. Examples of the positive electrode active material may include, but are not limited to, a lithium transition metal composite oxide and a lithium-containing transition metal phosphate compound.

In some embodiments, a transition metal in the lithium transition metal composite oxide may include V, Ti, Cr, Mn, Fe, Co, Ni, Cu, and the like. In some embodiments, the lithium transition metal composite oxide includes a lithium-cobalt composite oxide such as $LiCoO_2$, a lithium-nickel composite oxide such as $LiNiO_2$, a lithium-manganese composite oxide such as $LiMnO_2$, $LiMn_2O_4$, and $Li_2MnO_4$, and a lithium-nickel-manganese cobalt composite oxide such as

$LiNi_{1/3}Mn_{1/3}Co_{1/3}O_2$ and $LiNi_{0.5}Mn_{0.3}Co_{0.2}O_2$, where a portion of transition metal atoms serving as a main body of these lithium transition metal composite oxides are substituted with other elements such as Na, K, B, F, Al, Ti, V, Cr, Mn, Fe, Co, Li, Ni, Cu, Zn, Mg, Ga, Zr, Si, Nb, Mo, Sn, and W. Examples of the lithium transition metal composite oxide may include, but are not limited to, $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.45}Co_{0.10}Al_{0.45}O_2$, $LiMn_{1.8}Al_{0.2}O_4$, and $LiMn_{1.5}Ni_{0.5}O_4$. Examples of a combination of lithium transition metal composite oxides include, but are not limited to, a combination of $LiCoO_2$ and $LiMn_2O_4$, where a portion of Mn in $LiMn_2O_4$ may be substituted with a transition metal (for example, $LiNi_{0.33}Co_{0.33}Mn_{0.33}O_2$) and a portion of Co in $LiCoO_2$ may be substituted with a transition metal.

In some embodiments, a transition metal in the lithium-containing transition metal phosphate compound includes V, Ti, Cr, Mn, Fe, Co, Ni, Cu, or the like. In some embodiments, the lithium-containing transition metal phosphate compound includes iron phosphates such as $LiFePO_4$, $Li_3Fe_2(PO_4)_3$, and $LiFeP_2O_7$, and cobalt phosphates such as $LiCoPO_4$, where a portion of transition metal atoms serving as a main body of these lithium transition metal phosphate compound are substituted with other elements such as Al, Ti, V, Cr, Mn, Fe, Co, Li, Ni, Cu, Zn, Mg, Ga, Zr, Nb, and Si.

In some embodiments, the positive electrode active material includes lithium phosphate, which can improve the continuous charging property of the electrochemical apparatus. The use of the lithium phosphate is not limited. In some embodiments, the positive electrode active material and the lithium phosphate are used in combination. In some embodiments, relative to weights of the positive electrode active material and the lithium phosphate, a percentage of the lithium phosphate is greater than 0.1%, greater than 0.3%, or greater than 0.5%. In some embodiments, relative to weights of the positive electrode active material and the lithium phosphate, a percentage of the lithium phosphate is less than 10%, less than 8%, or less than 5%. In some embodiments, a percentage of the lithium phosphate is within a range between any two of the foregoing values.

Surface coating

A substance different from a composition of the positive electrode active material may be adhered onto the surface of the positive electrode active material. Examples of the surface adhesion substance include, but are not limited to: oxides such as aluminum oxide, silicon dioxide, titanium dioxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; carbon; and the like.

These surface adhesion substances may be adhered to the surface of the positive electrode active material by using the following methods: a method of dissolving or suspending the surface adhesion substance in the solvent to infiltrate into the positive electrode active material and then performing drying; a method of dissolving or suspending a surface adhesion substance precursor in the solvent to infiltrate into the positive electrode active material and then performing heating or the like to implement reaction of the surface adhesion substance; a method of adding the surface adhesion substance to a positive electrode active material precursor and performing sintering simultaneously. In a case of carbon adhesion, a method for mechanical adhesion of a carbon material (for example, activated carbon) may also be used.

In some embodiments, based on the weight of the positive electrode mixture layer, a percentage of the surface adhesion substance is greater than 0.1 ppm, greater than 1 ppm, or greater than 10 ppm. In some embodiments, based on the weight of the positive electrode mixture layer, a percentage of the surface adhesion substance is less than 10%, less than 5%, or less than 2%. In some embodiments, based on the weight of the positive electrode active material layer, a percentage of the surface adhesion substance is within a range between any two of the foregoing values.

Adhering a substance to the surface of the positive electrode active material can suppress oxidation reaction of the electrolytic salt on the surface of the positive electrode active material and prolong the service life of the electrochemical apparatus. An excessively small amount of substance adhered to the surface cannot fully exhibit the effects, while an excessively large amount of substance adhered to the surface hinders intercalation and deintercalation of lithium ions, causing an increase of the resistance sometimes.

In this application, another positive electrode active material adhered to the surface of the positive electrode active material but with substances of different compositions is also referred to as "positive electrode active material".

Shape

In some embodiments, shapes of particles of the positive electrode active material include, but are not limited to, block, polyhedron, spherality, ellipsoid, plate, needle, column, and the like. In some embodiments, the positive electrode active material particles include primary particles, secondary particles, or a combination thereof. In some embodiments, the primary particles may agglomerate to form the secondary particles.

Tap density

In some embodiments, a tap density of the positive electrode active material is greater than 0.5 g/$cm^3$, greater than 0.8 g/$cm^3$, or greater than 1.0 g/$cm^3$. When the tap density of the positive electrode active material falls within the foregoing range, the amount of the dispersion medium, the amount of the conductive material, and the amount of the positive electrode binder that are required for forming the positive electrode mixture layer can be suppressed, thereby ensuring a filling rate of the positive electrode active material and the capacity of the electrochemical apparatus. Using a composite oxide powder with a high tap density can form a positive electrode mixture layer with a high density. Generally, a larger tap density indicates being more preferable, and there is no particular upper limit. In some embodiments, a tap density of the positive electrode active material is less than 4.0 g/$cm^3$, less than 3.7 g/$cm^3$, or less than 3.5 g/$cm^3$. When the tap density of the positive electrode active material has the upper limit as described above, a decrease in load characteristics can be suppressed.

The tap density of the positive electrode active material can be calculated in the following manner: placing 5g to 10g of the positive electrode active material powder into a 10mL glass measuring cylinder and tapping 200 times at a stroke of 20 mm to obtain a powder filling density (the tap density).

Median particle size (D50)

When the positive electrode active material particles are primary particles, the median particle size (D50) of the positive electrode active material particles is a primary particle size of the positive electrode active material particles. When the primary particles of the positive electrode active material particles agglomerate to form secondary particles, the median particle size (D50) of the positive electrode active material particles is a secondary particle size of the positive electrode active material particles.

In some embodiments, the median particle size (D50) of the positive electrode active material particles is greater than 0.3 μm, greater than 0.5 μm, greater than 0.8 μm, or greater than 1.0 μm. In some embodiments, the median particle size (D50) of the positive electrode active material particles is less than 30 μm, less than 27 μm, less than 25 μm, or less than 22 μm. In some embodiments, the median particle size (D50) of the positive electrode active material particles is within a range between any two of the foregoing values. When the median particle size (D50) of the positive electrode active material particles falls within the foregoing range, a positive electrode active material with a high tap density can be obtained, and performance degradation of the electrochemical apparatus can be suppressed. On the other hand, problems such as stripes can be prevented during preparation of the positive electrode of the electrochemical apparatus (that is, when the positive electrode active material, the conductive material, the binder, and the like are made into a slurry with a solvent and the slurry is applied in a thin-film form). Herein, more than two types of positive electrode active materials having different median particle sizes are mixed to further improve the filling property during preparation of the positive electrode.

The median particle size (D50) of the positive electrode active material particles can be measured by using a laser diffraction/scattering particle size distribution tester: when LA-920 manufactured by HORIBA is used as a particle size distribution tester, using a 0.1% sodium hexametaphosphate aqueous solution as a dispersion medium for testing, and measuring a result at an refractive index of 1.24 after ultrasonic dispersion for five minutes.

Average primary particle size

When the primary particles of the positive electrode active material particles agglomerate to form the secondary particles, in some embodiments, the average primary particle size of the positive electrode active material is greater than 0.05 μm, greater than 0.1 μm, or greater than 0.5 μm. In some embodiments, the average primary particle size of the positive electrode active material is less than 5 μm, less than 4 μm, less than 3 μm, or less than 2 μm. In some embodiments, the average primary particle size of the positive electrode active material is within a range between any two of the foregoing values. When the average primary particle size of the positive electrode active material falls within the foregoing range, the powder filling property and the specific surface area can be ensured, performance degradation of the battery can be suppressed, and moderate crystallinity can be implemented, thereby ensuring reversibility of charging and discharging of the electrochemical apparatus.

The average primary particle size of the positive electrode active material may be obtained by observing an image from a scanning electron microscope (SEM): in the SEM image magnified 10000 times, for any 50 primary particles, obtaining longest values of slices obtained on the left and right boundary lines of the primary particles relative to the horizontal straight line, and calculating an average value to obtain the average primary particle size.

Specific surface area (BET)

In some embodiments, a specific surface area (BET) of the positive electrode active material is greater than 0.1 $m^2/g$, greater than 0.2 $m^2/g$, or greater than 0.3 $m^2/g$. In some embodiments, a specific surface area (BET) of the positive electrode active material is less than 50 $m^2/g$, less than 40 $m^2/g$, or less than 30 $m^2/g$. In some embodiments, a specific surface area (BET) of the positive electrode active material is within a range between any two of the foregoing values. When the specific surface area (BET) of the positive electrode active material falls within the foregoing range, the performance of the electrochemical apparatus can be ensured, and the positive electrode active material can have a good coating property.

The specific surface area (BET) of the positive electrode active material layer can be measured by using the following method: using a surface area meter (for example, a full-automatic surface area measuring apparatus manufactured by Ohkura Riken Co., Ltd.) to predry the sample in a stream of nitrogen gas at 150°C for 30 minutes, and using a nitrogen-helium gas mixture with the nitrogen pressure relative to the atmospheric pressure being accurately adjusted to 0.3 to conduct tests by using single point BET nitrogen adsorption utilizing a gas flow method.

Positive electrode conductive material

The type of positive electrode conductive material is not limited, and any known conductive material may be used. Examples of the positive electrode conductive material may include, but are not limited to, graphite such as natural graphite and artificial graphite; carbon black such as acetylene black; carbon materials including amorphous carbon such as acicular coke; carbon nanotube; graphene; and the like. The positive electrode conductive material may be used alone or in any combination.

In some embodiments, based on the weight of the positive electrode mixture layer, a percentage of the positive electrode conductive material is greater than 0.01%, greater than 0.1%, or greater than 1%. In some embodiments, based on the weight of the positive electrode mixture layer, a percentage of the positive electrode conductive material is greater than 10%, greater than 8%, or greater than 5%. When the percentage of the positive electrode conductive material falls within the foregoing range, sufficient conductivity and the capacity of the electrochemical apparatus can be ensured.

Positive electrode binder

The type of the positive electrode binder used during preparation of the positive electrode mixture layer is not particularly limited, and in the case of using the coating method, any material that can be dissolved or dispersed in a liquid medium used in the preparation of the electrode is acceptable. Examples of the negative electrode binder may include, but are not limited to, one or more of the following: a resin-based polymer such as polyethylene, polypropylene, polyethylene glycol terephthalate, polymethyl methacrylate, polyimide, aromatic polyamide, cellulose, or nitrocellulose; a rubber polymer such as styrene-butadiene rubber (SBR), isoprene rubber, polybutadiene rubber, fluorine rubber, acrylonitrile butadiene rubber (NBR), or ethylene propylene rubber; styrene·butadiene·styrene block copolymer or hydride thereof; a thermoplastic elastomeric polymer such as ethylene·propylene·diene terpolymer (EPDM), styrene·ethylene·butadiene·styrene copolymer, styrene·isoprene·styrene block copolymer or hydride thereof; a soft resinous polymer such as syndiotactic-1,2-polybutadiene, polyvinyl acetate, ethylene vinyl acetate copolymer, propylene·$\alpha$- olefin copolymer; a fluorine polymer such as polyvinylidene fluoride (PVDF), polytetrafluoroethylene, fluorinated polyvinylidene fluoride, polytetrafluoroethylene-ethylene copolymer; a polymer composition having ion conductivity of alkali metal ions (especially, lithium ions); and so on. The positive electrode binder may be used alone or in any combination.

In some embodiments, based on the weight of the positive electrode mixture layer, a percentage of the positive electrode binder is greater than 0.1%, greater than 1%, or greater than 1.5%. In some embodiments, based on the weight of the positive electrode mixture layer, a percentage of the positive electrode binder is less than 10%, less than 5%, less than 4%, or less than 3%. When the percentage of the positive electrode binder falls within the foregoing range, the positive electrode can have good conductivity and sufficient mechanical strength, and the capacity of the electrochemical apparatus can be ensured.

Solvent

The type of the solvent used for forming the positive electrode slurry is not limited provided that the solvent is capable of dissolving or dispersing the positive electrode active material, the conductive material, the positive electrode binder, and the thickener used as required. Examples of the solvent used to form the positive electrode slurry may include any of an aqueous solvent and an organic solvent. Examples of the aqueous medium may include, but are not limited to, water, a mixed medium of alcohol and water, and the like. Examples of the organic medium may include, but

are not limited to, aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine, and N,N-dimethylaminopropylamine; ethers such as diethyl ether, propylene oxide, and tetrahydrofuran (THF); amides such as N-methylpyrrolidone (NMP), dimethylformamide, and dimethylacetamide; aprotic polar solvents such as hexamethylphosphoramide and dimethyl sulfoxide; and so on.

Thickener

The thickener is usually used to adjust viscosity of the slurry. In the case of aqueous media, the thickener and styrene-butadiene rubber (SBR) emulsion may be used for making the slurry. The type of the thickener is not particularly limited, and examples of the thickener may include, but are not limited to, carboxymethyl cellulose, methyl cellulose, hydroxymethyl cellulose, ethyl cellulose, polyvinyl alcohol, oxidized starch, phosphorylated starch, casein, salt thereof, and the like. The thickener may be used alone or in any combination.

In some embodiments, based on the weight of the positive electrode mixture layer, the percentage of the thickener is greater than 0.1%, greater than 0.2%, or greater than 0.3%. In some embodiments, based on the weight of the positive electrode mixture layer, the percentage of the thickener is less than 5%, less than 3%, or less than 2%. In some embodiments, based on the weight of the positive electrode mixture layer, the percentage of the thickener is within a range between any two of the foregoing values. When the percentage of the thickener falls within the foregoing range, a good coating property of the positive electrode slurry can be ensured, and a decrease in the capacity of the electrochemical apparatus and an increase in the resistance can be suppressed.

Percentage of the positive electrode active material

In some embodiments, based on the weight of the negative electrode mixture layer, a percentage of the positive electrode active material is greater than 80%, greater than 82%, or greater than 84%. In some embodiments, based on the weight of the positive electrode mixture layer, a percentage of the positive electrode active material is less than 99%, or less than 98%. In some embodiments, based on the weight of the positive electrode mixture layer, a percentage of the positive electrode active material is within a range between any two of the foregoing values. When the percentage of the positive electrode active material falls within the foregoing range, the capacity of the positive electrode active material in the positive electrode mixture layer can be ensured while the strength of the positive electrode can be maintained.

Density of the positive electrode active material layer

In order to increase the filling density of the positive electrode active material, the positive electrode mixture layer obtained by coating and drying can be pressed by using a manual press, a roller, or the like. In some embodiments, a density of the positive electrode mixture layer is greater than 1.5 $g/cm^3$, greater than 2 $g/cm^3$, or greater than 2.2 $g/cm^3$. In some embodiments, a density of the positive electrode mixture layer is less than 5 $g/cm^3$, less than 4.5 $g/cm^3$, or less than 4 $g/cm^3$. In some embodiments, a density of the positive electrode mixture layer is within a range between any two of the foregoing values. When the density of the positive electrode mixture layer falls within the foregoing range, the electrochemical apparatus can have good charge/discharge performance and an increase in the resistance can be suppressed.

Thickness of the positive electrode mixture layer

The thickness of the positive electrode mixture layer is the thickness of the positive electrode mixture layer applied on either side of the positive electrode current collector. In some embodiments, the thickness of the positive electrode mixture layer is greater than 10 μm, or greater than 20 μm. In some embodiments, the thickness of the positive electrode mixture layer is less than 500 μm, or less than 450 μm.

Method for manufacturing a positive electrode active material

The positive electrode active material may be manufactured by using a commonly used method for manufacturing an inorganic compound. In order to prepare a spherical or ellipsoidal positive electrode active material, the following preparation method may be used: dissolving or pulverizing and dispersing the raw material of transition metal in a solvent such as water; adjusting the pH while stirring; making and reclaiming spherical precursors; after drying as needed, adding Li sources such as LiOH, $Li_2CO_3$, and $LiNO_3$; and performing sintering at a high temperature, to obtain the

positive electrode active material.

2. Positive electrode current collector

The positive electrode current collector is not particularly limited to any type and may be any material known as being applicable to serve as a positive electrode current collector. Examples of the positive electrode current collector may include, but are not limited to, metal materials such as aluminum, stainless steel, a nickel plating layer, titanium, and tantalum; and carbon materials such as a carbon cloth and carbon paper. In some embodiments, the positive electrode current collector is a metal material. In some embodiments, the positive electrode current collector is aluminum.

The form of the positive electrode current collector is not particularly limited. When the positive electrode current collector is a metal material, the positive electrode current collector may be in forms, including but not limited to a metal foil, a metal cylinder, a metal coil, a metal plate, a metal foil, a sheet metal mesh, a punched metal, a foamed metal, and the like. When the positive electrode current collector is a carbon material, the positive electrode current collector may take forms including but not limited to a carbon plate, a carbon film, a carbon cylinder, and the like. In some embodiments, the positive electrode current collector is a metal foil. In some embodiments, the metal foil is a mesh. The thickness of the metal foil is not particularly limited. In some embodiments, the thickness of the metal foil is greater than 1 $\mu$m, greater than 3 $\mu$m, or greater than 5 $\mu$m. In some embodiments, the thickness of the metal foil is less than 1 mm, less than 100 $\mu$m, or less than 50 $\mu$m. In some embodiments, the thickness of the metal foil is within a range between any two of the foregoing values.

In order to reduce the electronic contact resistance of the positive electrode current collector and the positive electrode mixture layer, the surface of the positive electrode current collector may include a conductive additive. Examples of the conductive additive may include, but are not limited to, carbon and precious metals such as gold, platinum, and silver.

A thickness ratio of the positive electrode active material layer to the positive electrode current collector is a thickness of one side of the positive electrode active material layer divided by the thickness of the positive electrode current collector, and its value is not particularly limited. In some embodiments, the thickness ratio is less than 50, less than 30, or less than 20. In some embodiments, the thickness ratio is greater than 0.5, greater than 0.8, or greater than 1. In some embodiments, the thickness ratio is within a range between any two of the foregoing values. When the thickness ratio falls within the foregoing range, heat dissipation of the positive electrode current collector during charging and discharging at high current density can be suppressed, and the capacity of the electrochemical apparatus can be ensured.

3. Preparation of positive electrode

The positive electrode may be prepared by forming, on a current collector, a positive electrode mixture layer containing a positive electrode active material and a binder. The positive electrode using the positive electrode active material can be prepared by using a conventional method: dry mixing the positive electrode active material, the binder, and the conductive material and the thickener that are to be used as required to form a sheet, and pressing the resulting sheet onto the positive electrode current collector; or dissolving or dispersing these materials in a liquid medium to make a slurry, and applying the slurry onto the positive electrode current collector, followed by drying, to form a positive electrode mixture layer on the current collector. Then, the positive electrode is obtained.

IV Separator

In order to prevent short circuit, a separator is typically provided between the positive electrode and the negative electrode. In this case, the electrolyte of this application typically permeates the separator.

The material and shape of the separator are not particularly limited, provided that the separator does not significantly impair the effects of this application. The separator may be a resin, glass fiber, inorganic substance, or the like that is formed of a material stable to the electrolyte of this application. In some embodiments, the separator includes a porous sheet or nonwoven fabric-like substance having an excellent fluid retention property, or the like. Examples of the material of the resin or glass fiber separator may include, but are not limited to, polyolefin, aromatic polyamide, polytetrafluoroethylene, polyethersulfone, and the like. In some embodiments, the polyolefin is polyethylene or polypropylene. In some embodiments, the polyolefin is polypropylene. The materials of the separator may be used alone or in any combination.

The separator may alternatively be a material formed by laminating the foregoing materials, and examples thereof include, but are not limited to, a three-layer separator formed by laminating polypropylene, polyethylene, and polypropylene in order.

Examples of the material of the inorganic substance may include, but are not limited to, oxides such as aluminum oxide and silicon dioxide, nitrides such as aluminum nitride and silicon nitride, and sulfates (for example, barium sulfate

and calcium sulfate). The form of the inorganic substance may include, but is not limited to, a granular or fibrous form.

The form of the separator may be a thin-film form, and examples thereof include, but are not limited to, a non-woven fabric, a woven fabric, a microporous film, and the like. In the thin-film form, the separator has a pore diameter of 0.01 μm to 1 μm and a thickness of 5 μm to 50 μm. In addition to the standalone thin-film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with alumina particles of which 90% have a particle size less than 1 μm.

The thickness of the separator is random. In some embodiments, the thickness of the separator is greater than 1 μm, greater than 5 μm, or greater than 8 μm. In some embodiments, the thickness of the separator is less than 50 μm, less than 40 μm, or less than 30 μm. In some embodiments, the thickness of the separator falls in a range between any two of the foregoing values. When the thickness of the separator falls within the foregoing range, its insulation performance and mechanical strength can be ensured, helping the rate performance and energy density of the electrochemical apparatus.

When a porous material such as a porous sheet or a nonwoven fabric is used as the separator, the porosity of the separator is random. In some embodiments, the porosity of the separator is greater than 10%, greater than 15%, or greater than 20%. In some embodiments, the porosity of the separator is less than 60%, less than 50%, or less than 45%. In some embodiments, the porosity of the separator falls in a range between any two of the foregoing values. When the porosity of the separator falls within the foregoing range, its insulation performance the mechanical strength can be ensured and film resistance can be suppressed, so that the electrochemical apparatus has good safety performance.

The average pore diameter of the separator is also random. In some embodiments, the average pore diameter of the separator is less than 0.5 μm or less than 0.2 μm. In some embodiments, the average pore diameter of the separator is greater than 0.05 μm. In some embodiments, the average pore diameter of the separator falls in a range between any two of the foregoing values. If the average pore diameter of the separator exceeds the foregoing range, a short circuit is likely to occur. When the average pore diameter of the separator falls within the foregoing range, film resistance can be suppressed while short circuit is prevented, so that the electrochemical apparatus has good safety performance.

## V. Assemblies of the electrochemical apparatus

The assemblies of the electrochemical apparatus include an electrode assembly, a collector structure, an outer packing case, and a protective unit.

### Electrode assembly

The electrode assembly may be any one of a laminated structure in which the positive electrode and the negative electrode are laminated with the separator interposed therebetween, and a structure in which the positive electrode and the negative electrode are wound in a swirl shape with the separator interposed therebetween. In some embodiments, a mass percentage of the electrode assembly (occupancy of the electrode assembly) in the internal volume of the battery is greater than 40% or greater than 50%. In some embodiments, the occupancy of the electrode assembly is less than 90% or less than 80%. In some embodiments, the occupancy of the electrode assembly is within a range between any two of the foregoing values. When the occupancy of the electrode assembly falls within the foregoing range, the capacity of the electrochemical apparatus can be ensured, and a decrease in repeated charge/discharge performance and high temperature storage property caused by an increasing internal pressure can be suppressed.

### Collector structure

The collector structure is not particularly limited. In some embodiments, the collector structure is a structure that helps reduce the resistance of wiring portions and bonding portions. When the electrode assembly is the foregoing laminated structure, a structure in which metal core portions of the electrode layers are bundled and welded to terminals can be used. An increase in an electrode area causes a higher internal resistance; therefore, it is also acceptable that more than two terminals are provided in the electrode to decrease the resistance. When the electrode assembly has the foregoing winding structure, more than two lead structures are provided at each of the positive electrode and the negative electrode, and are bundled at the terminals, so as to reduce the internal resistance.

Outer packing case

The material of the outer packing case is not particularly limited, provided that the material is a substance stable to the electrolyte in use. The outer packing case may use, but is not limited to a nickel-plated steel plate, stainless steel, metals such as aluminum, aluminum alloy, or magnesium alloy, or laminated films of resin and aluminum foil. In some embodiments, the outer packing case is made of metal including aluminum or an aluminum alloy, or is made of a laminated film.

The metal outer packing case includes but is not limited to a sealed packaging structure formed by depositing metal through laser welding, resistance welding, or ultrasonic welding; or a riveting structure formed by using the foregoing metal or the like with a resin pad disposed therebetween. The outer packing case using the laminated film includes but is not limited to a sealed packaging structure or the like formed by thermally adhering resin layers. In order to improve the sealing property, a resin different from the resin used in the laminated film may be sandwiched between the resin layers. When the sealed structure is formed by thermally adhering the resin layers through current collecting terminals, a resin having a polar group or a modified resin into which a polar group is introduced may be used as the sandwiched resin in consideration of the bonding of metal and resin. In addition, the outer packing case may be in any random shape. For example, it may have any one of a cylindrical shape, a square shape, a laminated form, a button form, a large form, or the like.

Protective unit

The protection unit may use a positive temperature coefficient (PTC), a temperature fuse, or a thermistor whose resistance increases during abnormal heat release or excessive current flows, a valve (current cutoff valve) for cutting off a current flowing in a circuit by sharply increasing an internal pressure or an internal temperature of a battery during abnormal heat release, or the like. The protection unit may be selected from elements that do not operate in conventional high-current use scenarios, or such design may be used that abnormal heat release or thermal runaway does not occur even without a protection unit.

VI. Application

The electrochemical apparatus according to this application includes any apparatus in which electrochemical reactions take place. Specific examples of the apparatus include all kinds of primary batteries, secondary batteries, fuel batteries, solar batteries, or capacitors. In particular, the electrochemical apparatus is a lithium secondary battery, including a lithium metal secondary battery or a lithium ion secondary battery.

This application also provides an electronic apparatus, including the electrochemical apparatus according to this application.

A purpose of the electrochemical apparatus in this application is not particularly limited. It can be used for any known electronic apparatus in the prior art. In some embodiments, the electrochemical apparatus of this application may be used for, without limitation, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The following uses a lithium-ion battery as an example and describes preparation of a lithium-ion battery with reference to specific examples. A person skilled in the art understands that the preparation method described in this application is only an example, and that all other suitable preparation methods fall within the scope of this application.

**Examples**

The following describes performance evaluation performed based on Examples and Comparative Examples of the lithium-ion battery in this application.

**I. Preparation of lithium-ion battery**

1. Preparation of negative electrode

Artificial graphite, styrene-butadiene rubber, and sodium carboxymethylcellulose were mixed based on a mass ratio of 96%:2%:2% in deionized water. The mixture was stirred to obtain a uniform negative electrode slurry. The

negative electrode slurry was applied onto a current collector of 12 μm. After steps of drying, cold pressing, cutting, and tab welding, a negative electrode was obtained.

2. Preparation of positive electrode

Lithium cobaltate ($LiCoO_2$), a conductive material (Super-P), and polyvinylidene fluoride (PVDF) were mixed based on a mass ratio of 95%:2%:3% in N-methylpyrrolidone (NMP), and stirred to obtain a uniform positive electrode slurry. The positive electrode slurry was applied onto an aluminum foil of 12 μm. After steps of drying, cold pressing, cutting, and tab welding, a positive electrode was obtained.

3. Preparation of electrolyte

Under a dry argon environment, EC, PC, and DEC (based on weight ratio of 1:1:1) were mixed, and $LiPF_6$ was added. The mixture was made even to obtain a base electrolyte, where the concentration of $LiPF_6$ was 1.15 mol/L. Different amounts of additives were added to the base electrolytic salt, to obtain different electrolytic salts used in different examples and comparative examples.

Abbreviations and full names of components in the electrolytic salt are listed in the following table:

| Name of material | Abbreviation | Name of material | Abbreviation |
|---|---|---|---|
| Ethylene carbonate | EC | Propylene carbonate | PC |
| Ethyl methyl carbonate | EMC | Ethyl propionate | EP |
| Propyl propionate | PP | Adiponitrile | ADN |
| Butanedinitrile | SN | 1,3,6-hexanetricarbonitrile | HTCN |
| Ethylene glycol di(2-cyanoethyl) ether | EDN | Lithium difluorophosphate | $LiPO_2F_2$ |
| 1,2,3 -tris(2-cyanoethoxy) propane | TCEP | 1,2-ethylene sulfate | DTD |
| 1,3 -propanesulfonate | PS | Compound of formula 1-1 | Formula 1-1 |
| Compound of formula 1-4 | Formula 1-4 | Compound of formula 3-1 | Formula 3-1 |
| Compound of formula 3-2 | Formula 3-2 | Compound of formula 1-5 | Formula 1-5 |

4. Preparation of separator

A polyethylene (PE) porous polymer film was used as the separator.

5. Preparation of lithium-ion battery

The resulting positive electrode, separator, and negative electrode were wound in order and placed in an outer packing foil, leaving a liquid injection hole. The electrolyte was injected from the liquid injection hole which was then sealed. Then, formation and grading were performed to obtain a lithium-ion battery.

**II. Test method**

1. Method for testing a high-temperature cycling capacity retention rate of the lithium-ion battery

At 65°C, the lithium-ion battery was charged at a constant current of 1C to 4.45 V, then charged at a constant voltage of 4.45 V to a current of 0.05C, and then discharged to 3.0 V at a constant current of 1C. This was the first cycle. The lithium-ion battery experienced 200 such cycles under the foregoing conditions. "1C" refers to a current at which a battery is fully discharged in one hour. The high-temperature cycling capacity retention rate of the lithium-ion battery was calculated by using the following equation:

$$\text{high-temperature cycling capacity retention rate} = (\text{after-cycling discharge capacity} / \text{discharge capacity at the first cycle}) \times 100\%.$$

2. Method for testing a thickness swelling rate of the lithium-ion battery after high-temperature cycling

At 65°C, the lithium-ion battery was left standing for 30 minutes, charged to 4.45 V at a constant current of 0.5C, charged to 0.05C at a constant voltage of 4.45 V, and then left standing for 5 minutes. The thickness of the lithium-ion battery was measured. After 100 cycles of such testing under the foregoing conditions, the thickness of the lithium-ion battery was measured again. The thickness swelling rate of the lithium-ion battery after high-temperature cycling was calculated by using the following formula:

$$\text{thickness swelling rate after high-temperature cycling} = [(\text{after-cycling thickness} - \text{before-cycling thickness})/\text{before-cycling thickness}] \times 100\%.$$

3. Method for testing an overcharge deformation rate of the lithium-ion battery

At 25°C, the lithium-ion battery was left standing for 30 minutes, charged to 4.45 V at a constant current of 0.5C, charged to 0.05C at a constant voltage of 4.45 V, and then left standing for 60 minutes. Thickness T1 of the lithium-ion battery was measured. Then, the lithium-ion battery was charged at a constant current of 0.1C rate for 60 minutes, and left standing for 30 minutes. The step was repeated for 5 times until the lithium-ion battery reached 150% state of charge (SOC). Thickness T2 of the lithium-ion battery was measured. The overcharge deformation rate of the lithium-ion battery was calculated by using the following formula:

$$\text{overcharge deformation rate} = [(T2-T1)/T1] \times 100\%.$$

4. Method for testing a discharge capacity retention rate of the lithium-ion battery

The lithium-ion battery was discharged to 3.0 V at a constant current of 0.5C, left standing for 5 minutes, charged to 4.45 V at a constant current of 0.5C, charged at a constant voltage till a cut-off current of 0.05C, left standing for 5 minutes, and then discharged to a cut-off voltage of 3.0 V at constant currents of 0.2C and 5C respectively. The discharge capacity at 5C is recorded as D1, and the discharge capacity at 0.2C is recorded as D0. Based on the discharge capacity at 0.2C, the discharge capacity retention rate of the lithium-ion battery at 5C is calculated by using the following formula:

$$\text{discharge capacity retention rate} = D1-D0/D0 \times 100\%.$$

Five samples were tested in each example or comparative example and an average value was obtained.

**III. Test result**

Table 1 shows the influence of the negative electrode current collector and the sulfur-oxygen double bond-containing compound in the electrolyte on the high-temperature cycling capacity retention rate, the high-temperature cycling swelling rate, and the overcharge deformation rate of the lithium-ion battery.

**Table 1**

| | Negative electrode current collector | Sulfur-oxygen double bond-containing compound | | High-temperature cycling capacity retention rate | High-temperature cycling swelling rate | Overcharge deformation rate |
|---|---|---|---|---|---|---|
| | | Type | Percentage b (%) | | | |
| Comparative Example 1-1 | Copper foil | / | / | 51% | 32% | 16.0% |
| Comparative Example 1-2 | Copper foil | PS | 1 | 52% | 27% | 13.5% |
| Comparative Example 1-3 | Copper foil | DTD | 0.5 | 55% | 23% | 11.5% |
| Comparative Example 1-4 | Copper foil | Formula 1-4 | 0.5 | 57% | 21% | 10.5% |
| Comparative Example 1-5 | Copper foil with 0.1% tin | / | / | 51% | 36% | 18.0% |
| Example 1-1 | Copper foil with 0.01% tin | PS | 1.5 | 71% | 17% | 5.1% |
| Example 1-2 | Copper foil with 0.1% tin | DTD | 0.5 | 74% | 11% | 3.3% |
| Example 1-3 | Copper foil with 0.1% tin | Formula 1-4 | 0.5 | 76% | 12% | 3.6% |
| Example 1-4 | Copper foil with 0.1% tin | PS + DTD | 1 + 0.5 | 81% | 10% | 3.0% |
| Example 1-5 | Copper foil with 0.1% tin | PS + Formula 1-4 | 1 + 0.5 | 83% | 9% | 2.7% |

| | Negative electrode current collector | Sulfur-oxygen double bond-containing compound | | High-temperature cycling capacity retention rate | High-temperature cycling swelling rate | Overcharge deformation rate |
|---|---|---|---|---|---|---|
| | | Type | Percentage b (%) | | | |
| Example 1-6 | Copper foil with 0.2% tin | PS | 1 | 67% | 18% | 5.4% |
| Example 1-7 | Copper foil with 0.005% tin | PS | 1 | 65% | 19% | 6.5% |
| Example 1-8 | Copper foil with 0.3% tin | PS | 1 | 66% | 20% | 8.7% |
| Example 1-9 | Copper foil with 0.1% tin | Formula 1-1 | 0.5 | 78% | 10% | 3.1% |
| Example 1-10 | Copper foil with 0.1% tin | Formula 1-5 | 0.5 | 77% | 11% | 3.7% |

"/" means no addition or not having such property.

As shown in the results, when the negative electrode current collector of the lithium-ion battery contains tin and the electrolyte contains a sulfur-oxygen double bond-containing compound, tin can inhibit the swelling/shrinkage of the negative electrode in the charging and discharging process, and the sulfur-oxygen double bond-containing compound helps stabilize a surface structure of the negative electrode, an interface between the negative electrode mixture layer and the negative electrode current collector, and an interface between the negative electrode mixture layer and the electrolyte. Therefore, the high-temperature cycling capacity retention rate of the lithium-ion battery is significantly increased, and the high-temperature cycling swelling rate and the overcharge deformation rate of the lithium-ion battery are significantly reduced.

When the percentage of tin in the negative electrode current collector falls within a range of 0.01% to 0.2%, the high-temperature cycling capacity retention rate, the high-temperature cycling swelling rate, and the overcharge deformation rate of the lithium-ion battery are improved more significantly.

Table 2 shows the influence of silver in the electrolyte on the high-temperature cycling capacity retention rate, the high-temperature cycling swelling rate, and the overcharge deformation rate of the lithium-ion battery. Examples 2-1 to 2-9 differ from Example 1-1 only in the parameters listed in Table 2.

**Table 2**

| | Negative electrode current collector | Sulfur-oxygen double bond-containing compound | | High-temperature cycling capacity retention rate | High-temperature cycling swelling rate | Overcharge deformation rate |
|---|---|---|---|---|---|---|
| | | Type | Percentage b (%) | | | |
| Example 1-1 | Copper foil with 0.01% tin | PS | 1.5 | 71% | 17% | 5.1% |
| Example 2-1 | Copper foil with 0.1% tin and 0.1% silver | PS | 1 | 79% | 10% | 2.5% |
| Example 2-2 | Copper foil with 0.1% tin and 0.1% silver | DTD | 0.5 | 82% | 9% | 2.3% |
| Example 2-3 | Copper foil with 0.1% tin and 0.1% silver | Formula 1-4 | 0.5 | 83% | 9% | 2.3% |
| Example 2-4 | Copper foil with 0.1% tin and 0.1% silver | PS + DTD | 1 + 0.5 | 85% | 8% | 2.0% |
| Example 2-5 | Copper foil with 0.1% tin and 0.1% silver | PS + Formula 1-4 | 1 + 0.5 | 87% | 7% | 1.8% |
| Example 2-6 | Copper foil with 0.1% tin and 0.01% silver | PS | 1 | 80% | 10% | 2.5% |
| Example 2-7 | Copper foil with 0.1% tin and 0.2% silver | PS | 1 | 74% | 11% | 3.1% |
| Example 2-8 | Copper foil with 0.1% tin and 0.005% silver | PS | 1 | 72% | 13% | 5.5% |
| Example 2-9 | Copper foil with 0.1% tin and 0.3% silver | PS | 1 | 71% | 14% | 6.1% |

As shown in the results, on the basis that the negative electrode current collector of the lithium-ion battery contains tin and the electrolyte contains a sulfur-oxygen double bond-containing compound, when the negative electrode current collector further contains 0.01% to 0.2% of silver, the high-temperature cycling capacity retention rate of the lithium-ion battery can be further increased, and the high-temperature cycling swelling rate and the overcharge deformation rate of the lithium-ion battery can be further reduced.

Table 3 shows the influence of thickness, tensile strength, and 0.2% proof stress of the negative electrode current collector on the high-temperature cycling capacity retention rate, the high-temperature cycling swelling rate, and the overcharge deformation rate of the lithium-ion battery. Examples 3-1 to 3-5 differ from Example 1-1 only in the parameters listed in Table 3.

**Table 3**

| | Thickness (μm) | Tensile strength ($N/mm^2$) | 0.2% proof stress ($N/mm^2$) | High-temperature cycling capacity retention rate | High-temperature cycling swelling rate | Overcharge deformation rate |
|---|---|---|---|---|---|---|
| Example 1-1 | 12 | 80 | 20 | 71% | 17% | 5.1% |
| Example 3-1 | 12 | 100 | 50 | 75% | 14% | 4.2% |
| Example 3-2 | 12 | 500 | 50 | 85% | 8% | 2.4% |
| Example 3-3 | 12 | 500 | 100 | 86% | 6% | 2.1% |
| Example 3-4 | 120 | 500 | 100 | 87% | 18% | 6.8% |
| Example 3-5 | 0.5 | 100 | 50 | 78% | 19% | 8.7% |

As shown in Table 3, the negative electrode current collector may have the following characteristics: the tensile strength is greater than 100 $N/mm^2$, the 0.2% proof stress is greater than 30 $N/mm^2$, and/or the thickness ranges from 1 μm to 100 μm. The negative electrode current collector having the tensile strength, 0.2% proof stress, and/or thickness within the foregoing range helps further increase the high-temperature cycling capacity retention rate of the lithium-ion battery and reduce the high-temperature cycling swelling rate and the overcharge deformation rate of the lithium-ion battery.

Table 4 shows the influence of different negative electrode active materials and the reflectance Ra at a wavelength of 550 nm of the negative electrode mixture layer on the high-temperature cycling capacity retention rate, the high-temperature cycling swelling rate, the overcharge deformation rate, and discharge capacity retention rate of the lithium-ion battery. Examples 4-1 to 4-6 differ from Example 1-1 only in the parameters listed in Table 4.

**Table 4**

| | Negative electrode active material | Ra | High-temperature cycling capacity retention rate | High-temperature cycling swelling rate | Overcharge deformation rate | Discharge capacity retention rate |
|---|---|---|---|---|---|---|
| Example 1-1 | Artificial graphite | 6.5% | 71% | 17% | 5.1% | 55.3% |
| Example 4-1 | 80% artificial graphite + 20% natural graphite | 7.5% | 78% | 9% | 2.8% | 62.3% |
| Example 4-2 | Mesophase carbon microsphere | 8% | 82% | 8% | 2.5% | 65.5% |
| Example 4-3 | 80% artificial graphite + 20% silicon carbide | 7.5% | 75% | 11% | 3.4% | 68.9% |
| Example 4-4 | 80% artificial graphite + 20% silicon oxide | 9.5% | 81% | 8% | 2.5% | 71.2% |
| Example 4-5 | 80% artificial graphite + 20% hard carbon | 15% | 86% | 7% | 2.2% | 75.6% |
| Example 4-6 | 50% artificial graphite + 50% hard carbon | 20% | 71% | 12% | 6.8% | 61.5% |

As shown in the results, different negative electrode active materials are used to make the reflectance Ra at a wavelength of 550 nm of the negative electrode mixture layer ranges from 7% to 15%. This further increases the high-temperature cycling capacity retention rate of the lithium-ion battery, further reduces the high-temperature cycling swelling rate and the overcharge deformation rate of the lithium-ion battery, and significantly increases the discharge capacity retention rate of the lithium-ion battery.

Table 5 shows the influence of electrolyte compositions on the high-temperature cycling capacity retention rate, the high-temperature cycling swelling rate, and the overcharge deformation rate of the lithium-ion battery. Examples 5-1 to 5-31 differ from Example 1-1 only in the parameters listed in Table 5.

**Table 5**

| | Propionate (20%) | Organic compound having cyano group (2%) | $LiPO_2F_2$ (0.5%) | Compound of formula 3 (0.5%) | High-temperature cycling capacity retention rate | High-temperature cycling swelling rate | Overcharge deformation rate |
|---|---|---|---|---|---|---|---|
| Example 1-1 | / | / | / | / | 71% | 17% | 5.1% |
| Example 5-1 | PP | / | / | / | 83% | 8% | 2.6% |
| Example 5-2 | EP | / | / | / | 82% | 7% | 2.2% |
| Example 5-3 | / | ADN | / | / | 84% | 5% | 1.6% |

| | Propionate (20%) | Organic compound having cyano group (2%) | $LiPO_2F_2$ (0.5%) | Compound of formula 3 (0.5%) | High-temperature cycling capacity retention rate | High-temperature cycling swelling rate | Overcharge deformation rate |
|---|---|---|---|---|---|---|---|
| Example 5-4 | / | SN | / | / | 84% | 6% | 1.9% |
| Example 5-5 | / | HTCN | / | / | 85% | 4% | 1.3% |
| Example 5-6 | / | EDN | / | / | 86% | 2% | 0.6% |
| Example 5-7 | / | TCEP | / | / | 88% | 2% | 0.5% |
| Example 5-8 | / | / | $LiPO_2F_2$ | / | 87% | 5% | 1.6% |
| Example 5-9 | / | / | / | Formula 3-1 | 88% | 3% | 1.0% |
| Example 5-10 | / | / | / | Formula 3-2 | 88% | 4% | 1.3% |
| Example 5-11 | / | / | $LiPO_2F_2$ | Formula 3-1 | 89% | 5% | 1.6% |
| Example 5-12 | PP | ADN | / | / | 85% | 6% | 1.9% |
| Example 5-13 | PP | SN | / | / | 85% | 6% | 1.9% |
| Example 5-14 | PP | HTCN | / | / | 86% | 5% | 1.6% |
| Example 5-15 | PP | EDN | / | / | 86% | 5% | 1.6% |
| Example 5-16 | PP | TCEP | / | / | 88% | 5% | 1.6% |
| Example 5-17 | PP | / | $LiPO_2F_2$ | / | 89% | 5% | 1.6% |
| Example 5-18 | PP | / | / | Formula 3-1 | 89% | 5% | 1.6% |
| Example 5-19 | PP | / | / | Formula 3-2 | 90% | 4% | 1.3% |

| | Propionate (20%) | Organic compound having cyano group (2%) | $LiPO_2F_2$ (0.5%) | Compound of formula 3 (0.5%) | High-temperature cycling capacity retention rate | High-temperature cycling swelling rate | Overcharge deformation rate |
|---|---|---|---|---|---|---|---|
| Example 5-20 | PP | / | $LiPO_2F_2$ | Formula 3-1 | 91% | 4% | 1.4% |
| Example 5-21 | / | HTCN | $LiPO_2F_2$ | / | 91% | 5% | 1.6% |
| Example 5-22 | / | HTCN | / | Formula 3-1 | 90% | 5% | 1.6% |
| Example 5-23 | / | HTCN | / | Formula 3-2 | 91% | 5% | 1.6% |
| Example 5-24 | / | HTCN | $LiPO_2F_2$ | Formula 3-1 | 91% | 4% | 1.3% |
| Example 5-25 | / | TCEP | / | Formula 3-1 | 91% | 4% | 1.3% |
| Example 5-26 | / | TCEP | / | Formula 3-2 | 92% | 3% | 1.0% |
| Example 5-27 | / | TCEP | $LiPO_2F_2$ | Formula 3-1 | 93% | 5% | 1.6% |
| Example 5-28 | PP | TCEP | $LiPO_2F_2$ | / | 95% | 3% | 1.0% |
| Example 5-29 | PP | TCEP | / | Formula 3-1 | 97% | 4% | 1.3% |
| Example 5-30 | PP | HTCN | $LiPO_2F_2$ | Formula 3-1 | 98% | 2% | 1.1% |
| Example 5-31 | PP | TCEP | $LiPO_2F_2$ | Formula 3-1 | 98% | 2% | 1.0% |

"/" means no addition or not having such property.

As shown in the results, on the basis that the negative electrode current collector of the lithium-ion battery contains tin and the electrolyte contains a sulfur-oxygen double bond-containing compound, when the electrolyte further contains propionate, an organic compound having a cyano group, lithium difluorophosphate, and/or the compound of formula 3, the high-temperature cycling capacity retention rate of the lithium-ion battery can be further increased, and the high-temperature cycling swelling rate and the overcharge deformation rate of the lithium-ion battery can be further reduced.

Table 6 shows the influence of the percentage b% of the sulfur-oxygen double bond-containing compound in

the electrolyte and its relationship with the percentage a% of tin in the negative electrode current collector on the high-temperature cycling capacity retention rate, the high-temperature cycling swelling rate, and the overcharge deformation rate of the lithium-ion battery. Examples 6-1 to 6-7 differ from Example 1-1 only in the parameters listed in Table 6.

## Table 6

| | a (%) | b (%) | b/a | High-temperature cycling capacity retention rate | High-temperature cycling swelling rate | Overcharge deformation rate |
|---|---|---|---|---|---|---|
| Example 1-1 | 0.01 | 1.5 | 150 | 71% | 17% | 5.1% |
| Example 6-1 | 0.1 | 3 | 30 | 87% | 6% | 1.7% |
| Example 6-2 | 0.01 | 1 | 100 | 83% | 8% | 2.2% |
| Example 6-3 | 0.2 | 0.01 | 0.05 | 65% | 15% | 4.2% |
| Example 6-4 | 0.1 | 0.1 | 1 | 72% | 12% | 3.8% |
| Example 6-5 | 0.1 | 0.005 | 0.05 | 64% | 19% | 4.5% |
| Example 6-6 | 0.1 | 10 | 100 | 73% | 14% | 3.9% |
| Example 6-7 | 0.1 | 12 | 120 | 63% | 21% | 4.8% |

As shown in the results, the percentage of the sulfur-oxygen double bond-containing compound in the electrolyte being within a range of 0.01% to 10% helps further increase the high-temperature cycling capacity retention rate of the lithium-ion battery and reduce the high-temperature cycling swelling rate and the overcharge deformation rate of the lithium-ion battery.

When b and a further satisfy 1≤b/a≤100, it is especially conducive to increasing the high-temperature cycling capacity retention rate of the lithium-ion battery and reducing the high-temperature cycling swelling rate and the overcharge deformation rate of the lithium-ion battery.

Table 7 shows the influence of the relationship between of the percentage b% of the sulfur-oxygen double bond-containing compound in the electrolyte and the reaction area d $m^2$ of the negative electrode mixture layer on the high-temperature cycling capacity retention rate, the high-temperature cycling swelling rate, and the overcharge deformation rate of the lithium-ion battery. Examples 7-1 to 7-5 differ from Example 1-1 only in the parameters listed in Table 7.

Table 7

| | b (%) | d ($m^2$) | d/b | High-temperature cycling capacity retention rate | High-temperature cycling swelling rate | Overcharge deformation rate |
|---|---|---|---|---|---|---|
| Example 1-1 | 1.5 | 0.45 | 0.3 | 71% | 17% | 5.1% |
| Example 7-1 | 0.1 | 3 | 30 | 81% | 11% | 3.1% |
| Example 7-2 | 6 | 3 | 0.5 | 83% | 8% | 2.2% |
| Example 7-3 | 0.6 | 3 | 5 | 88% | 6% | 2.5% |
| Example 7-4 | 1 | 3 | 3 | 89% | 5% | 2.0% |
| Example 7-5 | 0.1 | 5 | 50 | 72% | 15% | 7.0% |

As shown in the results, the percentage b% of the sulfur-oxygen double bond-containing compound in the electrolyte and the reaction area d $m^2$ of the negative electrode mixture layer satisfying $0.5 \leq d/b \leq 30$ helps further increase the high-temperature cycling capacity retention rate of the lithium-ion battery and reduce the high-temperature cycling swelling rate and the overcharge deformation rate of the lithium-ion battery.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Accordingly, descriptions appearing in the specification, such as "in some embodiments", "in the embodiments", "in an embodiment", "in another example", "in an example", "in a particular example", or "for example", are not necessarily references to the same embodiments or examples in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

## Claims

1. An electrochemical apparatus, comprising a positive electrode, a negative electrode, and an electrolyte, wherein the negative electrode comprises a negative electrode current collector and a negative electrode mixture layer formed on the negative electrode current collector, and the negative electrode current collector contains tin; and the electrolyte contains a sulfur-oxygen double bond-containing compound.

2. The electrochemical apparatus according to claim 1, wherein the negative electrode current collector contains element copper.

3. The electrochemical apparatus according to claim 1, wherein based on weight of the negative electrode current collector, a percentage of the tin is a%, and a falls in the range of 0.01 to 0.2.

4. The electrochemical apparatus according to claim 1, wherein the negative electrode current collector further contains silver, and based on weight of the negative electrode current collector, a percentage of the silver ranges from 0.01%

to 0.2%.

5. The electrochemical apparatus according to claim 1, wherein the negative electrode current collector has at least one of the following characteristics:

(1) average surface roughness ranges from 0.05 μm to 1.5 μm;
(2) tensile strength is greater than 100 $N/mm^2$;
(3) 0.2% proof stress is greater than 30 $N/mm^2$; or
(4) thickness ranges from 1 μm to 100 μm.

6. The electrochemical apparatus according to claim 1, wherein the negative electrode mixture layer has at least one of the following characteristics:

(a) reflectance Ra at a wavelength of 550 nm ranges from 7% to 15%;
(b) density da ranges from 1.3 $g/cm^3$ to 1.9 $g/cm^3$;
(c) weight per unit area La ranges from 4.5 $mg/cm^2$ to 12.5 $mg/cm^2$; or
(d) porosity Pa ranges from 20% to 40%.

7. The electrochemical apparatus according to claim 1, wherein the sulfur-oxygen double bond-containing compound contains at least one of the following compounds: cyclic sulfate, chain sulfate, chain sulfonate, cyclic sulfonate, chain sulfite, or cyclic sulfite.

8. The electrochemical apparatus according to claim 1, wherein the sulfur-oxygen double bond-containing compound contains a compound of formula 1:

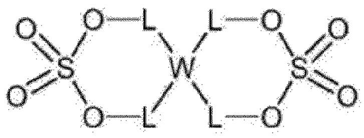 formula 1

wherein W is selected from

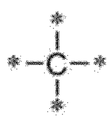, 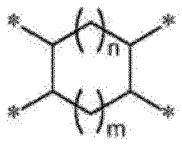, 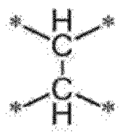,

or

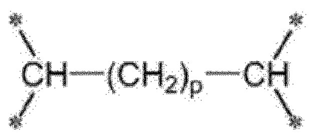;

L is independently selected from a single bond or methylene;
m is 1, 2, 3, or 4;
n is 0, 1, or 2; and
p is 0, 1, 2, 3, 4, 5, or 6.

9. The electrochemical apparatus according to claim 8, wherein the compound of formula 1 comprises at least one of the following:

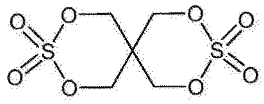
formula 1-1,

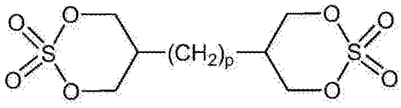
formula 1-2,

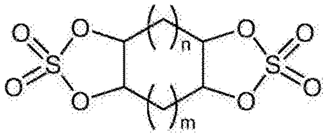
formula 1-3,

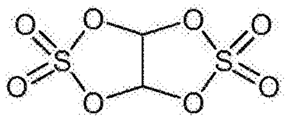
formula 1-4,

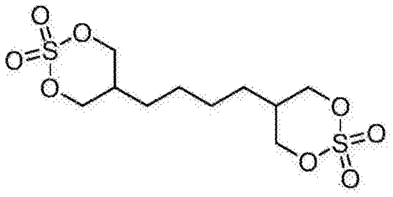
formula 1-5,

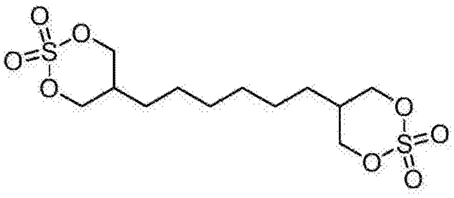
formula 1-6,

or

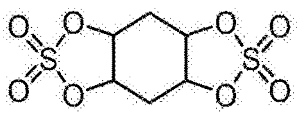
formula 1-7.

**10.** The electrochemical apparatus according to claim 1, wherein based on weight of the electrolyte, a percentage of the sulfur-oxygen double bond-containing compound is b%, and b falls in the range of 0.01 to 10.

**11.** The electrochemical apparatus according to claim 1, wherein the electrolyte further contains propionate, and the propionate contains a compound of formula 2:

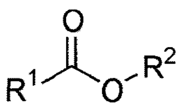
formula 2

wherein $R^1$ is selected from an ethyl group or a halogenated ethyl group;
$R^2$ is selected from a $C_1$-$C_6$ alkyl group or a $C_1$-$C_6$ halogenated alkyl group; and
based on weight of the electrolyte, a percentage of the propionate falls in the range of 10% to 60%.

**12.** The electrochemical apparatus according to claim 3, wherein based on weight of the electrolyte, a percentage of the sulfur-oxygen double bond-containing compound is b%, b falls in the range of 0.01 to 10, and $1 \leq b/a \leq 100$.

**13.** The electrochemical apparatus according to claim 10, wherein a reaction area d $m^2$ of the negative electrode mixture layer and the percentage b% of the sulfur-oxygen double bond-containing compound satisfy the following relationship:

$$0.5 \leq d/b \leq 30.$$

**14.** An electronic apparatus, comprising the electrochemical apparatus according to any one of claims 1 to 13.

**INTERNATIONAL SEARCH REPORT**

International application No.
**PCT/CN2020/121053**

**A. CLASSIFICATION OF SUBJECT MATTER**

H01M 4/66(2006.01)i; H01M 10/0567(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 电池, 集流体, 集电体, 集电器, 锡, Sn, 电解液, 硫酸酯, 亚硫酸酯, 磺酸酯, 亚磺酸酯, battery, current collector, tin, electrolyte, sulphate, sulfite, sulfonate, sulfinate

**C. DOCUMENTS CONSIDERED TO BE RELEVANT**

| Category* | Citation of document, with indication, where appropriate, of the relevant passages | Relevant to claim No. |
|---|---|---|
| E | CN 112397768 A (SHENZHEN INSTITUTES OF ADVANCED TECHNOLOGY, CHINESE ACADEMY OF SCIENCES) 23 February 2021 (2021-02-23)<br>description paragraphs 30-51 | 1, 2, 7 |
| X | CN 1799162 A (MITSUBISHI CHEMICAL CORPORATION) 05 July 2006 (2006-07-05)<br>description page 5 line 5 to page 9 line 2, page 17 line 27 to page 25 line 9 and page 31 lines 12-20 | 1-4, 7, 10-14 |
| Y | CN 1799162 A (MITSUBISHI CHEMICAL CORPORATION) 05 July 2006 (2006-07-05)<br>description page 5 line 5 to page 9 line 2, page 17 line 27 to page 25 line 9 and page 31 lines 12-20 | 5-6, 8-9 |
| X | CN 109075392 A (THE UNIVERSITY OF TOKYO) 21 December 2018 (2018-12-21)<br>description paragraphs 52-96, 132-133, 192-297 | 1-4, 7, 10-14 |
| Y | CN 109075392 A (THE UNIVERSITY OF TOKYO) 21 December 2018 (2018-12-21)<br>description paragraphs 52-96, 132-133, 192-297 | 5-6, 8-9 |
| X | CN 109904444 A (SHENZHEN INSTITUTES OF ADVANCED TECHNOLOGY, CHINESE ACADEMY OF SCIENCES) 18 June 2019 (2019-06-18)<br>description, paragraphs 46-123 | 1-4, 7, 10-14 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 June 2021** | **20 July 2021** |
| Name and mailing address of the ISA/CN<br>**China National Intellectual Property Administration (ISA/CN)**<br>**No. 6, Xitucheng Road, Jimenqiao, Haidian District, Beijing 100088**<br>**China** | Authorized officer |
| Facsimile No. **(86-10)62019451** | Telephone No. |

Form PCT/ISA/210 (second sheet) (January 2015)

INTERNATIONAL SEARCH REPORT

International application No.
PCT/CN2020/121053

C. DOCUMENTS CONSIDERED TO BE RELEVANT

| Category* | Citation of document, with indication, where appropriate, of the relevant passages | Relevant to claim No. |
|---|---|---|
| Y | CN 109904444 A (SHENZHEN INSTITUTES OF ADVANCED TECHNOLOGY, CHINESE ACADEMY OF SCIENCES) 18 June 2019 (2019-06-18) description, paragraphs 46-123 | 5-6, 8-9 |
| Y | CN 107069091 A (MITSUBISHI CHEMICAL CORPORATION) 18 August 2017 (2017-08-18) description paragraphs 536-557 | 5 |
| Y | CN 110265629 A (TDK CORPORATION) 20 September 2019 (2019-09-20) description paragraphs 75-83 | 6 |
| Y | CN 106252710 A (SK INNOVATION CO., LTD.) 21 December 2016 (2016-12-21) description paragraphs 13-122 | 8-9 |

Form PCT/ISA/210 (second sheet) (January 2015)

**INTERNATIONAL SEARCH REPORT**
**Information on patent family members**

International application No.
**PCT/CN2020/121053**

| Patent document cited in search report | Publication date (day/month/year) | Patent family member(s) | Publication date (day/month/year) |
|---|---|---|---|
| CN 112397768 A | 23 February 2021 | None | |
| CN 1799162 A | 05 July 2006 | JP 2003086249 A | 20 March 2003 |
| | | US 2004110068 A1 | 10 June 2004 |
| | | WO 02101869 A1 | 19 December 2002 |
| | | EP 1406338 A1 | 07 April 2004 |
| | | AU 2002306285 A1 | 23 December 2002 |
| CN 109075392 A | 21 December 2018 | WO 2017179682 A1 | 19 October 2017 |
| | | JP 6569883 B2 | 04 September 2019 |
| | | US 2019131658 A1 | 02 May 2019 |
| | | JP WO2017179682 A1 | 28 February 2019 |
| CN 109904444 A | 18 June 2019 | WO 2020192226 A1 | 01 October 2020 |
| CN 107069091 A | 18 August 2017 | CN 110061283 A | 26 July 2019 |
| | | CN 101292389 B | 22 September 2010 |
| | | CN 101292389 A | 22 October 2008 |
| | | CN 110010850 A | 12 July 2019 |
| CN 110265629 A | 20 September 2019 | US 2019280297 A1 | 12 September 2019 |
| | | JP 2019160782 A | 19 September 2019 |
| CN 106252710 A | 21 December 2016 | US 2016359196 A1 | 08 December 2016 |
| | | CN 106252710 B | 26 February 2021 |
| | | KR 20160144123 A | 16 December 2016 |
| | | US 10141608 B2 | 27 November 2018 |
| | | US 2019067741 A1 | 28 February 2019 |

Form PCT/ISA/210 (patent family annex) (January 2015)